(19) Europäisches Patentamt
European Patent Office
Office européen des brevets

(11) **EP 4 780 037 A1**

(12) **EUROPEAN PATENT APPLICATION**
published in accordance with Art. 153(4) EPC

(43) Date of publication:
**22.07.2026 Bulletin 2026/30**

(21) Application number: **23951714.7**

(22) Date of filing: **11.09.2023**

(51) International Patent Classification (IPC):
***H04W 12/06*** (2021.01)

(52) Cooperative Patent Classification (CPC):
**H04W 12/06**

(86) International application number:
**PCT/CN2023/118034**

(87) International publication number:
**WO 2025/054766 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Meng**
  **Dongguan, Guangdong 523860 (CN)**
• **GAN, Lu**
  **Dongguan, Guangdong 523860 (CN)**
• **XIONG, Lihui**
  **Dongguan, Guangdong 523860 (CN)**
• **SHI, Cong**
  **Dongguan, Guangdong 523860 (CN)**

(74) Representative: **RGTH
Patentanwälte PartGmbB
Mönckebergstraße 11
20095 Hamburg (DE)**

(54) **AUTHENTICATION METHOD AND DEVICE**

(57) Embodiments of the present application provide an authentication method, a device, a computer readable storage medium, a computer program product, and a computer program. The method comprises: receiving an echo signal of a first sensing reference signal, the echo signal of the first sensing reference signal being used for authenticating a sensing sending device, and the sensing sending device being a device for sending the first sensing reference signal (S210).

Receive an echo signal of a first sensing reference signal, where the echo signal of the first sensing reference signal is used to authenticate a sensing transmitting device, and the sensing transmitting device is a device that transmits the first sensing reference signal — S210

FIG. 2

Description

## TECHNICAL FIELD

The present application relates to the field of communications, and more particularly, to authentication methods, devices, a computer-readable storage medium, a computer program product, and a computer program.

## BACKGROUND

With the development of technology, the introduction of sensing technology into communication networks or communication systems has become a key technology. In the communication network or communication system, there are various sensing scenarios, such as scenarios where terminals and base stations sense each other, scenarios where terminals sense each other, scenarios where base stations sense each other, and scenarios where multiple sensing nodes coordinate sensing. However, how to ensure that a sensing reference signal measured by a sensing receiving device (or sensing signal receiving end or sensing signal measuring end) comes from a legitimate or secure device while realizing sensing measurement, to ensure the security of sensing processing, has become a problem that needs to be solved.

## SUMMARY

Embodiments of the present application provide authentication methods, devices, a computer-readable storage medium, a computer program product, and a computer program.

The embodiments of the present application provide an authentication method performed by a sensing receiving device, including:

receiving an echo signal of a first sensing reference signal, where the echo signal of the first sensing reference signal is used to authenticate a sensing transmitting device, and the sensing transmitting device is a device that transmits the first sensing reference signal.

The embodiments of the present application provide an authentication method performed by a sensing transmitting device, including:

transmitting a first sensing reference signal, where the first sensing reference signal is used by a sensing receiving device to authenticate the sensing transmitting device.

The embodiments of the present application provide a sensing receiving device, including:

a first communication unit configured to receive an echo signal of a first sensing reference signal, where the echo signal of the first sensing reference signal is used to authenticate a sensing transmitting device, and the sensing transmitting device is a device that transmits the first sensing reference signal.

The embodiments of the present application provide a sensing transmitting device, including:

a second communication unit configured to transmit a first sensing reference signal, where the first sensing reference signal is used by a sensing receiving device to authenticate the sensing transmitting device.

The embodiments of the present application provide a sensing receiving device, including a transceiver, a processor, and a memory. The memory is configured to store a computer program, and the processor is configured to call the computer program stored in the memory and run the computer program, to cause the sensing receiving device to perform the above-mentioned method.

The embodiments of the present application provide a sensing transmitting device, including a transceiver, a processor, and a memory. The memory is configured to store a computer program, and the processor is configured to call the computer program stored in the memory and run the computer program, to cause the sensing transmitting device to perform the above-mentioned method.

The embodiments of the present application provide a chip, configured to implement the above-mentioned method.

Specifically, the chip includes: a processor configured to call a computer program from a memory and run the computer program, to cause a device equipped with the chip to perform the above-mentioned method.

The embodiments of the present application provide a computer-readable storage medium configured to store a computer program, where the computer program, when executed by a device, causes the device to perform the above-mentioned method.

The embodiments of the present application provide a computer program product, including computer program instructions, where the computer program instructions cause a computer to perform the above-mentioned method.

The embodiments of the present application provide a computer program, where the computer program, when executed on a computer, causes the computer to perform the above-mentioned method.

By employing the authentication method provided in the embodiments, the sensing receiving device authenticates the sensing transmitting device based on the echo signal of the currently received sensing reference signal. Thus, it is possible to ensure that the measurement is performed on the sensing reference signal transmitted by a legitimate device while ensuring that the sensing receiving device performs the sensing measurement, thereby ensuring the security of the sensing processing.

## BRIEF DESCRIPTION OF THE DRAWINGS

FIG. 1 is a schematic diagram of an application scenario according to the embodiments of the present application.
FIG. 2 is a schematic flowchart of an authentication method according to an embodiment of the present application.
FIG. 3 is a schematic flowchart of an authentication method according to another embodiment of the present application.
FIG. 4 is a schematic diagram of a scenario of an architecture of an authentication method according to an embodiment of the present application.
FIG. 5 is a schematic flowchart of an authentication method according to an embodiment of the present application.
FIG. 6 is a schematic diagram of a scenario of a method for calculating and verifying a signature according to an embodiment of the present application.
FIG. 7 is a schematic diagram of another scenario of an architecture of an authentication method according to an embodiment of the present application.
FIG. 8 is another schematic flowchart of an authentication method according to an embodiment of the present application.
FIG. 9 is a schematic diagram of yet another scenario of an architecture of the authentication method according to an embodiment of the present application.
FIG. 10 is yet another schematic flowchart of an authentication method according to an embodiment of the present application.
FIGS. 11a to 11c are schematic diagrams of a physical layer protocol data unit (PPDU) format according to an embodiment of the present application.
FIG. 12 is a schematic diagram of various sensing scenarios according to an embodiment of the present application.
FIG. 13 is a schematic diagram of a sensing scenario according to an embodiment of the present application.
FIG. 14 is a schematic flowchart of a sensing process according to an embodiment of the present application.
FIG. 15 is a schematic flowchart of an authentication process.
FIG. 16 is a schematic flowchart of another authentication process.
FIG. 17 is a schematic block diagram of a sensing receiving device according to an embodiment of the present application.
FIG. 18 is a schematic block diagram of a sensing transmitting device according to an embodiment of the present application.
FIG. 19 is a schematic block diagram of a communication device according to an embodiment of the present application.
FIG. 20 is a schematic block diagram of a chip according to the embodiments of the present application.
FIG. 21 is a schematic block diagram of a communication system according to the embodiments of the present application.

## DETAILED DESCRIPTION

Technical solutions in the embodiments of the present application may be applied to various communication systems, such as a long term evolution (LTE), an LTE-advanced (LTE-A), a new radio (NR), an evolution system of the NR system, a wireless local area network (WLAN), a wireless fidelity (WiFi), or other communication systems.

The embodiments of the present application describe various embodiments in conjunction with network devices and terminals. The terminal may be mobile or fixed, and may also be referred to as a mobile station, user unit, etc. The terminal may be a station in a WLAN, or a smart terminal, a wireless modem, a laptop, a pad, etc. In the embodiments of the present application, the terminal may be a virtual reality (VR) terminal/augmented reality (AR) terminal, an industrial control terminal, a self-driving terminal, a remote medical terminal, a smart grid terminal, a transportation safety terminal, a smart city terminal, or a wireless terminal in smart home, etc. As an example but not a limitation, in the embodiments of the present application, the terminal may also be a wearable device.

In the embodiments of the present application, the network device may be a device used for communicating with a terminal, and the network device may be an access point in a WLAN, an evolutional base station in an LTE, a relay station, an in-vehicle device, a wearable device, a network device (gNB) in an NR network, a network device in a future evolved public land mobile network (PLMN), or a network device in a non-terrestrial network, etc. As an example but not a limitation, in the embodiments of the present application, the network device may have mobile characteristics. For example, the network device may be a device which is mobile.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exists alone. In addition, a character "/" herein generally indicates that the associated objects before and after this character are in an "or" relationship. It should be understood that, "indicate/indicated/indicating/indication" mentioned in the embodiments of the present application may mean a direct indication, an indirect indication, or may mean that there is an association relationship. For example, A indicating B may mean that A directly indicates B; for example, B may be acquired by A. Alternatively, A indicating B may mean that A indirectly indicates B; for example, A indicates C, and B may be acquired by C. Alternatively, A indicating B may mean that there is an association relationship between A and B. In the description of the embodiments of the present application, the term "correspond/corresponding/correspondence" may mean that there is a direct correspondence or an indirect correspondence between the two, or may mean that there is an association relationship between the two, or may mean a relationship of indicating and being indicated, or a relationship of configuring and being configured, etc.

To facilitate understanding of the technical solutions of the embodiments of the present application, the related technologies of the embodiments of the present application are described below, and the following related technologies, as optional solutions, may be arbitrarily combined with the technical solutions of the embodiments of the present application, and they all fall within the protection scope of the embodiments of the present application.

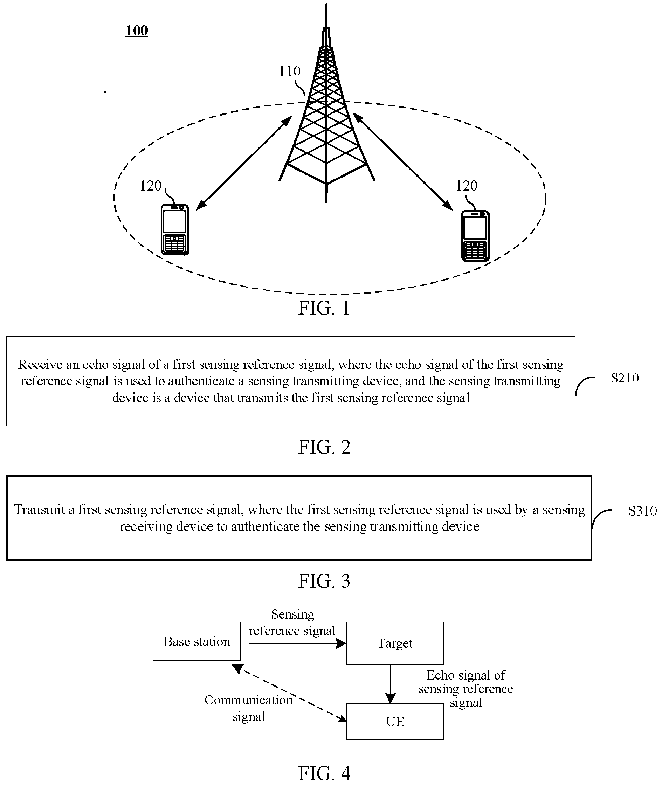

FIG. 1 exemplarily illustrates a communication system 100. The communication system includes a network device 110 and two terminals 120. In a possible implementation, the communication system 100 may include multiple network devices 110, and there are another number of terminal devices within the coverage range of each network device 110 120, which is not limited in the embodiments of the present application. In a possible implementation, the communication system 100 may further include a mobility management entity, an access and mobility management function and other network entities, which is not limited in the embodiments of the present application. The network device may include an access network device and a core network device. That is, the communication system may include multiple core networks for communicating with the access network device. The access network device may be a base station of LTE, LTE-A, or NR system. Considering the communication system shown in FIG. 1 as an example, the communication device may include a network device with a communication function and a terminal with a communication function. The communication device may further include other devices in the communication system, such as a network controller, a mobility management entity, and other network entities, which is not limited in the embodiments of the present application.

FIG. 2 is a schematic flowchart of an authentication method performed by a sensing receiving device according to an embodiment of the present application. The method includes at least part of the following.

In S210, an echo signal of a first sensing reference signal is received, where the echo signal of the first sensing reference signal is used to authenticate a sensing transmitting device, and the sensing transmitting device is a device that transmits the first sensing reference signal.

FIG. 3 is a schematic flowchart of an authentication method performed by a sensing transmitting device according to another embodiment of the present application. The method includes at least part of the following.

In S310, a first sensing reference signal is transmitted, where the first sensing reference signal is used by a sensing receiving device to authenticate the sensing transmitting device.

In some possible implementations, the sensing receiving device and the sensing transmitting device may be devices in a communication network (e.g., a mobile communication network or a cellular network).

In some possible examples, the sensing receiving device may be a terminal, and the sensing transmitting device may be an access network device.

In these examples, the first sensing reference signal is a downlink sensing reference signal, where the downlink sensing reference signal is one of: a channel state information reference signal (CSI-RS), a positioning reference signal (PRS), a demodulation reference signal (DMRS), a downlink data signal for sensing, or a downlink reference signal for sensing.

The positioning reference signal may specifically be a downlink positioning reference signal (DL-PRS).

The downlink data signal for sensing may refer to a signal for sensing based on a downlink data channel, or a signal transmitted by the downlink data channel used for sensing, etc. The downlink data channel may be a physical downlink shared channel (PDSCH), which will not be listed exhaustively here.

The downlink reference signal for sensing may refer to a downlink reference signal dedicated to sensing, i.e., a downlink reference signal dedicated to sensing different from the CSI-RS, DL-PRS, DMRS, etc.

The first sensing reference signal is a downlink sensing reference signal, which may mean that the type of the first sensing reference signal is a downlink sensing reference signal. For example, the first sensing reference signal may be referred to as a first downlink sensing reference signal.

In some possible examples, the sensing receiving device may be an access network device, and the sensing transmitting device may be a terminal.

In these examples, the first sensing reference signal is an uplink sensing reference signal, where the uplink sensing reference signal is one of: a sounding reference signal (SRS), a DMRS, an uplink data signal for sensing, or an uplink reference signal for sensing.

The uplink data signal for sensing may refer to a signal for sensing based on an uplink data channel, or a signal transmitted by the uplink data channel used for sensing, etc. The uplink data channel may be a physical uplink shared channel (PUSCH), which will not be listed exhaustively here.

The uplink reference signal for sensing may refer to an uplink reference signal dedicated to sensing, i.e., an uplink reference signal dedicated to sensing different from the SRS and dedicated to sensing.

The first sensing reference signal being an uplink sensing reference signal may mean that the type of the first sensing reference signal is an uplink sensing reference signal. For example, the first sensing reference signal may be referred to as a first uplink sensing reference signal.

In some other possible examples, both the sensing transmitting device and the sensing receiving device may be terminals. For example, the sensing transmitting device may be a first terminal, and the sensing receiving device may be a second terminal. In this case, the first sensing reference signal may be a sidelink signal used for sensing.

In some possible implementations, the sensing receiving device and the sensing transmitting device may be devices in a wireless local area network (WLAN). The sensing receiving device is a wireless access point (AP), and the sensing transmitting device is a station (STA). Alternatively, the sensing receiving device is an STA, and the sensing transmitting device is an AP.

In these examples, the first sensing reference signal may be a physical layer protocol data unit (PPDU). The PPDU may specifically refer to a PPDU used for sensing. Specifically, the first sensing reference signal being a PPDU may mean that the type of the aforementioned first sensing reference signal is a PPDU. For example, the first sensing reference signal may be referred to as a first PPDU.

In some possible implementations, the sensing transmitting device transmitting a first sensing reference signal may include: the sensing transmitting device transmitting multiple sensing reference signals to the sensing receiving device, where any one of the multiple sensing reference signals is the first sensing reference signal.

Among the multiple sensing reference signals, different sensing reference signals occupy different time domain ranges. That is, the transmission time of each sensing reference signal among the multiple sensing reference signals follows a chronological sequence.

Optionally, the sensing transmitting device transmits multiple sensing reference signals to the sensing receiving device, which may refer to that the sensing transmitting device transmits a specified number of sensing reference signals to the sensing receiving device.

The specified number may be configured according to the actual situation. The specified number may be an integer greater than or equal to 2. For example, the specified number may be 10, 100, 5, or more or less, which is not limited or exhaustively listed here.

The time interval between two adjacent sensing reference signals among the specified number of sensing reference signals may be pre-configured. For example, the time interval may be 1 second, 10 seconds, 1 minute, or longer or shorter, which is not limited here.

That is, in these examples, there is no limitation on the duration within which the sensing transmitting device completes transmitting all the sensing reference signals, as long as it is sufficient to complete transmitting all the sensing reference signals based on the pre-configured time interval and the specified number.

Optionally, the sensing transmitting device transmits multiple sensing reference signals to the sensing receiving device, which may refer to that the sensing transmitting device transmits multiple sensing reference signals to the sensing receiving device within a first duration.

The first duration may be set according to the actual situation. For example, it may be 10 minutes, 1 hour, 30 minutes, or 1 minute, which will not be listed exhaustively here.

The number of the multiple sensing reference signals is not limited in these examples, but preferably, the number of sensing reference signals is an integer greater than or equal to 2. The explanation of the time interval between two adjacent sensing reference signals among the multiple sensing reference signals is the same as in the previous examples, which will not be repeated here.

That is, in these examples, there is no limitation on how many sensing reference signals the sensing transmitting device transmits, as long as it completes transmitting all the sensing reference signals based on the pre-configured time interval and the first duration.

In the present application, any sensing reference signal transmitted by the sensing transmitting device is referred to as a first sensing reference signal, and a signal received by the sensing receiving device is referred to as an echo signal of the first sensing reference signal. The first sensing reference signal transmitted by the sensing transmitting device will be reflected by a sensing target, and an echo signal is obtained, and the echo signal is a signal received by the sensing receiving device. Therefore, the echo signal of the first sensing reference signal specifically refers to an echo signal generated after the first sensing reference signal is reflected by the sensing target.

The echo signal of the first sensing reference signal may be used not only to authenticate the sensing transmitting device but also to obtain corresponding sensing measurement data; the sensing measurement data may refer to sensing measurement data related to the sensing target.

On the sensing receiving device side, receiving the echo signal of the first sensing reference signal may refer to that: the sensing receiving device receives an echo signal of each sensing reference signal of the multiple sensing reference signals, where any one of the multiple sensing reference signals is the first sensing reference signal.

The echo signal of each sensing reference signal is an echo signal generated after each sensing reference signal is reflected by the sensing target.

Specifically, the sensing receiving device receives the echo signal of each of the multiple sensing reference signals, which may refer to, the sensing receiving device receiving echo signals of different sensing reference signals within different time domains. Here, the order in which the multiple sensing reference signals are transmitted on the sensing transmitting device side is theoretically the same as the order in which the echo signals of the multiple sensing reference signals are received on the sensing receiving device side.

In some possible implementations, the first sensing reference signal may be any sensing reference signal of all the sensing reference signals transmitted by the sensing transmitting device except a first one of the sensing reference signals; that is, the echo signal of the first sensing reference signal may be any echo signal received by the sensing receiving device except the echo signal of the first one of the sensing reference signals.

It should be noted that, in these implementations, the echo signal of any sensing reference signal except the echo signal of the first one of the sensing reference signals is taken as an example to illustrate subsequent authentication processing. Since the authentication processing of the echo signal of each sensing reference signal, except the echo signal of the first one of the sensing reference signals, that needs to be used to perform authentication processing is the same as the authentication processing of the echo signal of the first sensing reference signal, the authentication processing of the echo signal of each sensing reference signal will not be described in detail below for the sake of brevity. In addition, the echo signal of the sensing reference signal that used to perform the authentication processing may include the echo signals of all sensing reference signals except the echo signal of the first one of the sensing reference signals; or it may include the echo signals of at least some of the sensing reference signals except the echo signal of the first one of the sensing reference signals.

The processing performed at the sensing receiving device side after receiving the echo signal of the first sensing reference signal may include: obtaining a sensing measurement parameter by calculation based on the echo signal of the first sensing reference signal. Specifically, obtaining the sensing measurement parameter by calculation based on the echo signal of the first sensing reference signal refers to: obtaining the sensing measurement parameter corresponding to the echo signal of the first sensing reference signal by calculation based on the echo signal of the first sensing reference signal.

The sensing measurement parameter may include one or more parameter types, and the parameter types may also be referred to as physical layer attributes. That is to say, the sensing measurement parameter may include a value of each physical layer attribute of one or more physical layer attributes corresponding to the first sensing reference signal. The above parameter types (or physical layer attributes) may be pre-configured.

In a preferred example, the sensing measurement parameter includes multiple parameter types. In this example, the sensing measurement parameter may also be referred to as a multi-attribute sensing measurement parameter. For example, the multi-attribute sensing measurement parameter includes at least two of the following parameter types: channel state information (CSI), received signal strength (RSS), received signal strength indication (RSSI), phase, Doppler shift, or angle of arrival (AOA), which is merely an illustrative example. In actual processing, the parameter type included in the multi-attribute sensing measurement parameter may be related to the sensing service type. That is, the parameter type included in the multi-attribute sensing measurement parameter may vary depending on the sensing service type, all possible cases herein will not be limited or listed.

The processing method for obtaining the sensing measurement parameter corresponding to the echo signal of the first sensing reference signal by calculation based on the echo signal of the first sensing reference signal may be as follows: the sensing receiving device measuring the echo signal of the first sensing reference signal to obtain a channel estimation result, and obtaining at least two of: CSI, RSS, RSSI, phase, Doppler shift, or AOA corresponding to the echo signal of the first sensing reference signal by calculation based on the channel estimation result; and using at least two of: CSI, RSS, RSSI, phase, Doppler shift, or AOA as the multi-attribute sensing measurement parameter corresponding to the echo signal of the first sensing reference signal.

In this example, the multi-attribute sensing measurement parameter corresponding to the echo signal of the first sensing reference signal obtained by the sensing receiving device may be represented as: $H[n] = [H_1[n], \dots, H_M[n]]$, where $H[n]$ represents the multi-attribute sensing measurement parameter (or may also be directly called the sensing measurement parameter); M is the number of parameter types included in the multi-attribute sensing measurement parameter, and M may be an integer greater than or equal to 2; "$H_1[n], ... , H_M[n]$" represents the numerical values (or assigned values) corresponding to all parameter types (i.e., the first parameter type to the M-th parameter type) of the M parameter types included in the multi-attribute sensing measurement parameter.

In a possible example, the sensing measurement parameter includes one parameter type. In this example, the parameter type may include at least one of: CSI, RSS, RSSI, phase, Doppler shift, or AOA.

The processing method for obtaining the sensing measurement parameter corresponding to the echo signal of the first sensing reference signal by calculation based on the echo signal of the first sensing reference signal may be as follows: the sensing receiving device measuring the echo signal of the first sensing reference signal to obtain a channel estimation result, and obtaining at least one of CSI, RSS, RSSI, phase, Doppler shift, or AOA corresponding to the echo signal of the first sensing reference signal by calculation based on the channel estimation result; and using at least one of CSI, RSS, RSSI, phase, Doppler shift, or AOA as the sensing measurement parameter corresponding to the echo signal of the first sensing reference signal.

The method for determining the channel estimation result in the above examples is not limited here. In addition, the method for obtaining any one of the CSI, RSS, carrier, timing, codeword, or phase based on the channel estimation result in the above examples is also not limited here.

The processing after the sensing receiving device obtaining the sensing measurement parameter by calculation may further include: authenticating the sensing transmitting device based on the sensing measurement parameter and a sensing reference parameter.

Optionally, the sensing reference parameter is obtained by calculation based on an echo signal of a second sensing reference signal, the second sensing reference signal precedes the first sensing reference signal.

Specifically, the sensing reference parameter is a sensing measurement parameter corresponding to the echo signal of the second sensing reference signal, the sensing measurement parameter corresponding to the echo signal of the second sensing reference signal is obtained by calculation based on the echo signal of the second sensing reference signal. The calculation method of the sensing measurement parameter corresponding to the echo signal of the second sensing reference signal should be the same as the calculation method of the sensing measurement parameter corresponding to the echo signal of the first sensing reference signal, which will not be repeated here. Correspondingly, the types and quantities of parameters included in the sensing measurement parameter corresponding to the echo signal of the second sensing reference signal, i.e., the sensing reference parameter, should be the same as the types and quantities of parameters included in the sensing measurement parameter, which will not be repeated here. In some examples, in a case where the sensing reference parameter includes multiple parameter types, the sensing reference parameter may be referred to as a multi-attribute sensing reference parameter.

The second sensing reference signal precedes the first sensing reference signal, which may mean that: the transmission time of the second sensing reference signal is earlier than the transmission time of the first sensing reference signal; and/or the reception time of the echo signal of the second sensing reference signal is earlier than the reception time of the echo signal of the first sensing reference signal.

The time may be represented using a specified unit related to time domain, the unit related to time domain may be pre-configured or default. For example, the unit related to time domain may be any one of slot, second, minute, hour, millisecond, microsecond, and symbol, and all possible units related to time domain are not exhaustively listed or limited here. In an example in which the unit related to time domain is slot, the time may specifically refer to slot. The second sensing reference signal preceding the first sensing reference signal may mean that: the transmission slot of the second sensing reference signal is earlier than the transmission slot of the first sensing reference signal; and/or the reception slot of the echo signal of the second sensing reference signal is earlier than the reception slot of the echo signal of the first sensing reference signal. In an example in which the unit related to time domain is any one of second, minute, or hour, the time may specifically refer to a moment. The second sensing reference signal preceding the first sensing reference signal may mean that: the transmission time of the second sensing reference signal is earlier than the transmission time of the first sensing reference signal; and/or the reception time of the echo signal of the second sensing reference signal is earlier than the reception time of the echo signal of the first sensing reference signal.

The echo signal of the second sensing reference signal may be determined or selected based on the reception time of the echo signal of the first sensing reference signal and authentication time domain interval. Specifically, the manner in which the sensing receiving device determines the echo signal of the second sensing reference signal may be: obtaining a historical reception time by subtracting the authentication time interval from the reception time of the echo signal of the first sensing reference signal; and using an echo signal of a sensing reference signal received at the historical reception time as the echo signal of the second sensing reference signal.

The authentication time interval may be pre-configured or pre-defined, and the authentication time interval is also represented using a specified unit related to the time domain.

In an example in which the unit related to time domain is slot, the authentication time domain interval may be the number of slots, such as one slot or multiple slots. Accordingly, the sensing receiving device may obtain the historical receiving slot by subtracting the authentication slot interval from the receiving slot of the echo signal of the first sensing reference signal, and use the echo signal of the sensing reference signal received in the historical receiving slot as the echo signal of the second sensing reference signal. In some examples, the echo signal of the first sensing reference signal mentioned above may be received in an n-th time slot, and the authentication time domain interval is $l$ slots. Then, the second sensing reference signal may be received in an $(n - l)$-th time slot, where n is an integer greater than or equal to 2, $l$ is an integer greater than or equal to 1, and n is greater than 1.

For example, if the authentication time interval is 1 slot, which means that the sensing receiving device continuously uses the echo signal of each sensing reference signal as the echo signal of the first sensing reference signal in this embodiment starting from the echo signal of the second one (or the one received for the second time) of the sensing reference signals, and uses an echo signal of a sensing reference signal received in the previous slot of the slot in which the echo signal of the first sensing reference signal is received as the echo signal of the second sensing reference signal for subsequent authentication processing. For example, if the authentication time interval is 2 slots, which means that the sensing receiving device uses an echo signal of the third one (or the one received for the third time) of the sensing reference signals as the echo signal of the first sensing reference signal in this embodiment, and uses an echo signal of a sensing reference signal received in the second preceding slot of the slot in which the echo signal of the first sensing reference signal is received as the echo signal of the second sensing reference signal; and then, the sensing receiving device continuously uses the echo signal of each sensing reference signal after the echo signal of the third one of the sensing reference signals as the echo signal of the first sensing reference signal in this embodiment, and uses the echo signal of the sensing reference signal received in the second preceding slot of the slot in which the echo signal of the first sensing reference signal is received as the echo signal of the second sensing reference signal.

In an example in which the unit related to time domain is second, the authentication time interval may be 1 second, 5 seconds, etc. Assuming that the authentication time interval is 5 seconds, the sensing receiving device may obtain the historical reception time by subtracting 5 seconds from the reception time of the echo signal of the first sensing reference signal, and use an echo signal of a sensing reference signal received at the historical reception time as the echo signal of the second sensing reference signal.

It should be understood that the above is merely an illustrative example, and all possible situations will not be exhaustive listed or limited.

In conjunction with the above embodiments, it should also be noted that, the authentication time domain interval is pre-configured, and the authentication time domain interval may be greater than the transmission interval of two adjacent sensing reference signals (or greater than the reception interval of echo signals of two adjacent sensing reference signals). Therefore, in some preferred examples, the sensing receiving device may use the reception time of an echo signal of the received sensing reference signal for the first time as a basic reference time, and use at least an echo signal of a sensing reference signal received at a time having an interval with the basic reference time which is greater than or equal to the authentication time domain interval as the first sensing reference signal.

In some possible examples, the authentication time domain interval may also be used to determine the echo signal of the first sensing reference signal. For example, the processing of the sensing receiving device may further include: in a case where the time difference between the reception time of the echo signal of the currently received sensing reference signal and the reception time of the echo signal of the sensing reference signal that is previously processed for authentication is equal to the authentication time domain interval, using the echo signal of the currently received sensing reference signal as the echo signal of the first sensing reference signal. For example, if the authentication time interval is 1 slot, the processing is the same as that in the above examples, which will not be repeated. For example, if the authentication time interval is 2 slots, which means that, the sensing receiving device will use the echo signal of the third one (or the one received for the third time) of the sensing reference signals as the echo signal of the first sensing reference signal in this embodiment, and use the echo signal of the sensing reference signal received in the second preceding slot of the slot in which the first sensing reference signal is received as the echo signal of the second sensing reference signal; and then, the sensing receiving device will use the echo signal of the fifth one (or the one received for the fifth time) of the sensing reference signals as the echo signal of the first sensing reference signal in this embodiment again, and use the echo signal of the sensing reference signal received in the second preceding slot of the slot in which the first sensing reference signal is received as the echo signal of the new second sensing reference signal. The processing is performed in sequence.

Optionally, the sensing reference parameter may be pre-configured or pre-defined. The types of parameters included in the pre-configured or pre-defined sensing reference parameter are the same as those of the sensing measurement parameter, which will not be repeated. In some examples, in a case where the sensing reference parameter includes multiple parameter types, the sensing reference parameter may be referred to as a multi-attribute sensing reference parameter.

Authenticating the sensing transmitting device based on the sensing measurement parameter and sensing reference parameter specifically refers to: authenticating the sensing transmitting device based on the sensing measurement parameter, the sensing reference parameter, and an authentication threshold.

Authenticating the sensing transmitting device based on the sensing measurement parameter, the sensing reference parameter, and the authentication threshold specifically refers to: authenticating the sensing transmitting device based on the similarity between the sensing measurement parameter and the sensing reference parameter and the authentication threshold.

Furthermore, authenticating the sensing transmitting device based on the similarity between the sensing measurement parameter and the sensing reference parameter and the authentication threshold may refer to: calculating the similarity between the sensing measurement parameter and the sensing reference parameter based on the values corresponding to each parameter type in the sensing measurement parameter and the sensing reference parameter; and authenticating the sensing transmitting device based on the similarity and the authentication threshold.

Here, similarity may be represented by one of: Euclidean distance, Manhattan distance, Chebyshev distance, and cosine distance, etc.; different similarities may be calculated using different calculation methods of the similarity.

Optionally, the similarity may be specifically represented by Euclidean distance. Calculating the similarity between the sensing measurement parameter and the sensing reference parameter based on the values corresponding to each parameter type in the sensing measurement parameter and the sensing reference parameter may refer to: calculating a sum of squares of differences between values of each identical parameter type in the sensing measurement parameter and the sensing reference parameter, and then taking a square root of the sum to obtain Euclidean distance between the sensing measurement parameter and the sensing reference parameter; the Euclidean distance is used as the similarity between the sensing measurement parameter and sensing reference parameter. Here, calculating the sum of squares of differences between the values of each identical parameter type in the sensing measurement parameter and the sensing reference parameter, and then taking the square root of the sum to obtain the Euclidean distance between the sensing measurement parameter and the sensing reference parameter may refer to: calculating differences between the values corresponding to the same parameter type in the sensing measurement parameter and the sensing reference parameter, and then calculating L2 norm based on the differences between the values corresponding to the same parameter type to obtain the Euclidean distance between the sensing measurement parameter and the sensing reference parameter; the L2 norm is defined as the square root of the sum of squares of all elements of a vector.

For example, considering an example in which the unit related to time domain is a slot and an authentication time domain interval of 1 slot, calculating the Euclidean distance may be expressed as: $diff_{Euc}(\boldsymbol{H}[n], \boldsymbol{H}[n-1]) = ||\boldsymbol{H}[n]-\boldsymbol{H}[n-1]||_2$, where "$diff_{Euc}()$" represents a function for calculating Euclidean distance; n indicates that the echo signal of the current first sensing reference signal is received in the n-th slot; n-1 represents the echo signal of the second sensing reference signal received in the previous slot of the slot at which the first sensing reference signal is received; $\boldsymbol{H}[n]$ represents the sensing measurement parameter corresponding to the first sensing reference signal, the specific content of which may be $\boldsymbol{H}[n] = \boldsymbol{H}_1[n], ... , \boldsymbol{H}_M[n]]$, and the specific explanation of this content is the same as the above examples, which will not be repeated; $\boldsymbol{H}[n-1]$ represents the sensing measurement parameter corresponding to the echo signal of the second sensing reference signal; $||.||_2$ represents the L2 norm.

Optionally, the similarity may be specifically represented by Manhattan distance. Calculating the similarity between the sensing measurement parameter and sensing reference parameter based on the values corresponding to each of the same parameter type in the sensing measurement parameter and sensing reference parameter may refer to: calculating the sum of absolute values of differences between the corresponding values of each identical parameter type in the sensing measurement parameter and the sensing reference parameter, and then squaring the sum to obtain the Manhattan distance between the sensing measurement parameter and the sensing reference parameter; the Manhattan distance is used as the similarity between the sensing measurement parameter and sensing reference parameter.

For example, considering an example in which the unit related to time domain is a slot and an authentication time domain interval of 1 slot, calculating the Manhattan distance may be expressed as: $diff_{Man}(\boldsymbol{H}[n], \boldsymbol{H}[n-1]) = (\sum_{i=1}^{M} |\boldsymbol{H}_i[n] - \boldsymbol{H}_i[n-1]|)^2$, where "$diff_{Man}()$" represents a function for calculating the Manhattan distance; the descriptions of n, n-1, $\boldsymbol{H}[n]$ and $\boldsymbol{H}[n-1]$ are the same as that in the above embodiments, which will not be repeated; i is an integer greater than or equal to 1 and less than or equal to M; "$\boldsymbol{H}_i[n]$" represents a value of the i-th parameter type in the sensing measurement parameter corresponding to the echo signal of the first sensing parameter; "$\boldsymbol{H}_i[n-1]$" represents a value of the i-th parameter type in the sensing measurement parameter corresponding to the echo signal of the second sensing parameter; and |.| represents absolute value calculation.

Optionally, the similarity may be specifically represented using Chebyshev distance. Calculating the similarity between the sensing measurement parameter and sensing reference parameter based on the values corresponding to each of the same parameter type in the sensing measurement parameter and sensing reference parameter may refer to: calculating the squares of the absolute values of the differences between the values corresponding to each of the same parameter type in the sensing measurement parameter and sensing reference parameter, taking the maximum value among the squares of the absolute values of the differences between the values corresponding to each of the same parameter type as the Chebyshev distance between the sensing measurement parameter and sensing reference parameter, and using the Chebyshev distance as the similarity between the sensing measurement parameter and sensing reference parameter.

For example, considering an example in which a unit relate to time domain is slot and an authentication time domain interval of 1 slot, the above calculation of the Chebyshev distance may be expressed as: $diff_{Che}(\boldsymbol{H}[n], \boldsymbol{H}[n-1]) = \max_{i}\{|\boldsymbol{H}_i[n] - \boldsymbol{H}_i[n-1]|^2\}$ , where "$diff_{Che}$ ( )" represents a function for calculating the Manhattan distance; "$\max_{i}\{\cdot\}$" represents taking the maximum value; the relevant description of n, n-1, $\boldsymbol{H}[n]$, $\boldsymbol{H}[n-1]$, i, "$\boldsymbol{H}_i[n]$", "$\boldsymbol{H}_i[n-1]$" are the same as those in the aforementioned embodiments, which will not be repeated here.

Optionally, the similarity may be specifically represented by cosine distance (or cosine similarity). Calculating the similarity between the sensing measurement parameter and the sensing reference parameter based on the values corresponding to each of the same parameter type in the sensing measurement parameter and the sensing reference parameter may refer to: calculating the dot product of the values corresponding to each of the same parameter type in the sensing measurement parameter and the sensing reference parameter to obtain a first value; calculating the sum of squares of the values of all parameter types in the sensing measurement parameter and then taking the square root of the sum to obtain a second value; calculating the sum of squares of values of all parameter types in the sensing reference parameter and then taking the square root to obtain a third value; multiplying the second value by the third value to obtain a fourth value; dividing the first value by the fourth value to obtain the cosine distance between the sensing measurement parameter and the sensing reference parameter; and using the cosine distance as the similarity between the sensing measurement parameter and the sensing reference parameter. Here, calculating the sum of squares of values of all the parameter types in the sensing reference parameter and then taking the square root to obtain the third value may refer to: calculating L2 norm based on the value of each parameter type in the sensing reference parameter.

For example, considering an example in which the unit related to time domain is a slot and an authentication time domain interval of 1 slot, calculating the cosine distance (or cosine similarity) may be expressed as: $diff_{Cos}(\boldsymbol{H}[n], \boldsymbol{H}[n-1]) = \frac{\boldsymbol{H}[n]\cdot\boldsymbol{H}^T[n-1]}{\|\boldsymbol{H}[n]\|_2\|\|\boldsymbol{H}[n-1]\|\|_2}$ , where "$diff_{Cos}$ ( )" represents a function for calculating the cosine distance (or cosine similarity); the relevant description of n, n-1, $\boldsymbol{H}[n]$, $\boldsymbol{H}[n-1]$ are the same as those in the above embodiments, which will not be repeated; $\boldsymbol{H}^T[n-1]$ represents the transpose of $\boldsymbol{H}[n-1]$; "•" represents the dot product; and $\|.\|_2$ represents the L2 norm.

It should be understood that the above are only a few exemplary representation manners of the similarity. In actual processing, other distances may also be used to represent the similarity, and correspondingly, other calculation manners may be used to calculate the similarity, and all possible manners are not exhaustively listed in the embodiments.

Authenticating the sensing transmitting device based on the similarity and the authentication threshold may include: determining that the sensing transmitting device is successfully authenticated in response to that the similarity is lower than the authentication threshold; and determining that the authentication of the sensing transmitting device fails in response to that the similarity is not lower than the authentication threshold. Here, since similarity refers to the distance between the sensing measurement parameter and the sensing reference parameter, the smaller the distance, the more similar the sensing measurement parameter and the sensing reference parameter are. Therefore, the similarity being lower than the specified authentication threshold means that the similarity between the sensing measurement parameter and the sensing reference parameter meets the requirements, it is determined that the sensing transmitting device is successfully authenticated.

The above determining that the sensing transmission device is successfully authenticated may refer to at least one of: determining that the sensing transmission device is a legitimate device, confirming that the first sensing reference signal comes from a legitimate sensing transmission device, or determining that the first sensing reference signal is a reliable reference signal, etc.

The authentication threshold mentioned above may be pre-configured or pre-defined, and the authentication threshold may be a real number greater than 0 and less than 1.

Considering an example in which the unit related to time domain is a slot and an authentication time domain interval of 1 slot, if the echo signal of the first sensing reference signal is received in the n-th slot, then after the sensing receiving device calculates the similarity between the sensing measurement parameter and the sensing reference parameter, the following judgment $diff(\boldsymbol{H}[n], \boldsymbol{H}[n-l]) \leq \eta$ is made, where "$diff$" represents the similarity calculation function, which may be any of the above calculation functions; and $\eta$ is the authentication threshold (a real number greater than 0 and less than 1). The smaller the authentication threshold, the higher the authentication accuracy.

Furthermore, after authenticating the sensing transmitting device based on the similarity between the sensing measurement parameter and the sensing reference parameter and authentication threshold, the processing of the sensing receiving device may further include: obtaining the first sensing measurement data corresponding to the echo signal of the first sensing reference signal in response to that the sensing transmitting device is successfully authenticated.

Obtaining the first sensing measurement data corresponding to the echo signal of the first sensing reference signal may refer to: obtaining the first sensing measurement data based on the channel estimation result of the echo signal of the first sensing reference signal. The specific manner of obtaining the channel estimation result is not limited in this embodiment.

The first sensing measurement data is obtained based on the channel estimation result, and in the above embodiments, the sensing measurement parameter corresponding to the echo signal of the first sensing signal is also obtained based on the channel estimation result. In some possible examples, the first sensing measurement data may be the same as the sensing measurement parameter corresponding to the echo signal of the first sensing signal. In some possible examples, the first sensing measurement data may be different from the sensing measurement parameter corresponding to the echo signal of the first sensing signal. For example, the first sensing measurement data may be of a data type that needs to be reported, and therefore the sensing measurement parameter may be further processed to obtain the first sensing measurement data. The above are all illustrative examples. Whether the first sensing measurement data is the same as or different from the sensing measurement parameter, it is within the protection scope of this embodiments. As long as the first sensing measurement data is obtained based on the channel estimation result, it is within the protection scope of this embodiment, and all possible cases are not exhaustively listed or limited here.

For example, the first sensing measurement data may include at least one of the following data types: a sensing final result, such as a distance of the sensing target, a speed, a heartbeat, or an action; an sensing intermediate result, such as point cloud information or time delay Doppler matrix; a sensing preliminary result, such as time delay, Doppler, angle, or intensity; and an original sensing result, such as a received signal (the echo signal of the first sensing reference signal) or original channel information (e.g., at least one of the echo signal of the first sensing reference signal or the complex result of the channel response, amplitude, phase, I-path/Q-path, and a related calculation result).

Additionally, the processing may further include: in response to the failed authentication of the sensing transmitting device, discarding the echo signal of the first sensing reference signal to obtain the corresponding first sensing measurement data, and/or discarding the sensing measurement parameters corresponding to the echo signal of the first sensing reference signal.

In some embodiments, after the sensing receiving device obtains the first sensing measurement data based on the echo signal of the first sensing reference signal, the processing may further include: determining whether the echo signal of the currently received first sensing reference signal is the echo signal of the last received sensing reference signal; if not, continuing to monitor and receive an echo signal of a next sensing reference signal, and then using the echo signal of the next sensing reference signal as an echo signal of a new first sensing reference signal again, and performing the same processing as in the above embodiments; if the echo signal of the first sensing reference signal is the echo signal of the last received sensing reference signal, the sensing receiving device obtaining the total sensing measurement result and reporting the total sensing measurement result.

In these embodiments, both the first sensing reference signal and the new first sensing reference signal are sensing reference signals except the sensing reference signal transmitted by the sensing transmitting device for the first time.

Optionally, the total sensing measurement result may include: one or more sensing measurement data, where the data types that each sensing measurement data may include are the same as those of the first sensing measurement data described above, which will not be repeated here. It should be noted that any sensing measurement data of the sensing measurement data may come from the echo signal of the sensing reference signal received for the first time; or any sensing measurement data may come from the echo signal of the sensing reference signal received for any time except for the echo signal of the sensing reference signal received for the first time (and the any sensing measurement data is obtained in response to determining that the sensing transmitting device is successfully authenticated based on the echo signal of the sensing reference signal), which is not limited here.

Optionally, the total sensing measurement result may be calculated based on one or more sensing measurement data, and the method for calculating the total sensing measurement result is not limited here.

In some possible implementations, the first sensing reference signal is a first one of the sensing reference signals among all the sensing reference signals transmitted by the sensing transmitting device; that is, the echo signal of the first sensing reference signal is an echo signal of the first one of the sensing reference signals received by the sensing receiving device.

In an embodiment, the processing after receiving the echo signal of the first sensing reference signal on the sensing receiving device side may include: obtaining the sensing measurement parameter by calculation based on the echo signal of the first sensing reference signal. Specifically, obtaining the sensing measurement parameter by calculation based on the echo signal of the first sensing reference signal refers to: obtaining the sensing measurement parameter corresponding to the echo signal of the first sensing reference signal by calculation based on the echo signal of the first sensing reference signal.

After the sensing receiving device obtains the sensing measurement parameter by calculation, the processing may further include: authenticating the sensing transmitting device based on the sensing measurement parameter and the sensing reference parameter.

Authenticating the sensing transmitting device based on the sensing measurement parameter and the sensing reference parameter specifically refers to: authenticating the sensing transmitting device based on the sensing measurement parameter, the sensing reference parameter and an authentication threshold. The descriptions of the sensing measurement parameter and authentication threshold are the same as those in the aforementioned embodiments, and will not be repeated. The types of parameters included in the sensing reference parameter are the same as those in the aforementioned sensing measurement parameter, and will not be repeated here. The specific processing manner for authenticating the sensing transmission device based on the similarity between the sensing measurement parameter and the sensing reference parameter, such as the calculation manner of the similarity, or the authentication manner of the sensing transmission device, is the same as that in the aforementioned embodiments, and will not be repeated here.

The difference from the aforementioned embodiments is that the sensing reference parameter may only be pre-configured or pre-defined. In this embodiment, the echo signal of the first sensing reference signal is the echo signal of the sensing reference signal received by the sensing receiving device for the first time. Therefore, there is no echo signal of a sensing reference signal that is received for the earlier time, and that is capable of being referenced, so that it is necessary to pre-configure or pre-define sensing reference parameters to calculate the similarity.

Furthermore, after authenticating the sensing transmitting device based on the similarity between the sensing measurement parameter and the sensing reference parameter and the authentication threshold, the processing of the sensing receiving device may further include: obtaining the first sensing measurement data based on the echo signal of the first sensing reference signal in response to that the sensing transmitting device is successfully authenticated. Additionally, the processing may include: in response to that the authentication of the sensing transmission device fails, performing no processing on the echo signal of the first sensing reference signal, for example, discarding the echo signal of the first sensing reference signal, or obtaining the corresponding sensing measurement data without using the echo signal of the first sensing reference signal. The specific processing manner for obtaining the first sensing measurement data is the same as that in the aforementioned embodiments, and will not be repeated here.

In an embodiment, the first sensing reference signal carries a first signature for authenticating the sensing transmitting device. The first signature is obtained by calculation based on a private key.

The private key may refer to a private key of the sensing transmitting device. The method for obtaining or configuring the private key of the sensing transmitting device is not limited in this embodiment.

The processing of the sensing transmitting device transmitting the first sensing reference signal (i.e., the first one of the sensing reference signals or the sensing reference signal transmitted for the first time) may include: the sensing transmitting device obtaining the first signature by using a signature algorithm based on the private key and the data content used to calculate the signature, carrying the first signature in the first sensing reference signal, and transmitting the first sensing reference signal.

The signature algorithm includes at least one of: a rivest-shamir-adleman (RSA) algorithm, SM2 algorithm, JSON Web Signatures (JWS) algorithm, or elliptic curve-based signature algorithm. The SM2 algorithm is a domestically developed algorithm introduced by the State Cryptography Administration of China, and is an asymmetric algorithm based on elliptic curves. Here, signature algorithms are not exhaustively listed or limited.

The data content used to calculate the signature may refer to at least part of the content that needs to be carried in the first sensing reference signal.

For example, in the case where the sensing receiving device is a terminal, and the sensing transmitting device is an access network device, the first sensing reference signal is a downlink sensing reference signal. The content that needs to be carried in the downlink sensing reference signal may include a reference signal sequence used for generating the downlink sensing reference signal; the data content used for calculating the signature may be the reference signal sequence.

For example, in the case where the sensing receiving device is an access network device, and the sensing transmitting device is a terminal, the first sensing reference signal is an uplink sensing reference signal, and the content that needs to be carried in the downlink sensing reference signal may include a reference signal sequence used for generating the uplink sensing reference signal; the data content used for calculating the signature may be the reference signal sequence.

For example, in the case where the sensing receiving device is a wireless access point (AP), and the sensing transmitting device is a station (STA), or in the case where the sensing receiving device is an STA, and the sensing transmitting device is an AP, the first sensing reference signal is a PPDU (e.g., a PPDU used for sensing), the data content used for calculating the signature may be the content of all fields of the PPDU used for sensing or the data content used for calculating the signature may be the content of the first specified field of all fields of the PPDU used for sensing. Here, the first specified field may include at least one of the field where the preamble is located, the field where the long training sequence is located, or the field where the short training sequence is located. Here, since the PPDU used for sensing may have different formats depending on actual needs, all the fields and the types or names of some specified fields that are contained in the PPDU are not limited or exhaustively listed in this embodiment, as long as in actual processing, at least some fields in a certain frame used for sensing may be used to calculate the first signature, which is within the protection scope of this embodiment.

For example, the sensing transmitting device obtaining the first signature by using a signature algorithm based on the private key and the content to be transmitted may refer to: calculating the content to be transmitted by using a signature algorithm to obtain the first signature based on the private key. For another example, the signature algorithm includes hash calculation and encryption calculation; correspondingly, the sensing transmitting device obtaining the first signature by using the signature algorithm based on the private key and the content to be transmitted may include: obtaining a hash value by hash calculation based on the content to be transmitted, and encrypting the hash value based on the private key to obtain the first signature. Here, the hash calculation may be a secure hash algorithm (SHA), and more specifically, the SHA may be SHA-256. It should be understood that this is only an illustrative example. In actual processing, as long as the algorithm by using any hash calculation is used, it is within the protection scope of this embodiment, and all possible algorithms of hash calculation are not exhaustively listed or limited here.

The processing after the sensing receiving device receives the echo signal of the first sensing reference signal (i.e., the echo signal of the first one of the sensing reference signals or the echo signal of the sensing reference signal received for the first time) may include: obtaining the first signature based on the echo signal of the first sensing reference signal; and authenticating the sensing transmitting device based on the public key and the first signature.

Obtaining the first signature based on the echo signal of the first sensing reference signal may refer to: the sensing receiving device parsing the echo signal of the first sensing reference signal to obtain the first signature. The parsing process may include demodulation or other processes, which will not be limited or exhaustively listed here.

Furthermore, the processing of the sensing receiving device parsing the echo signal of the first sensing reference signal to obtain the first signature may specifically include: the sensing receiving device parsing the echo signal of the first sensing reference signal to obtain the first signature and data content for verification. The data content used for verification may be the data content used to verify the first signature. The data content used for verification may be all or part of the data content carried in the first sensing reference signal, which is not limited thereto, as long as the data content used for verification has the same type as the data content used to calculate the signature in the aforementioned embodiments, it is within the protection scope of this embodiment.

The public key may refer to a public key of the sensing transmitting device. On the sensing receiving device side, a public key of the sensing transmitting device may be pre-configured in the sensing receiving device or pre-stored in the sensing receiving device. For example, the first sensing reference signal may carry the public key of the sensing transmitting device, and correspondingly, the sensing receiving device may simultaneously extract the first signature and the public key of the sensing transmitting device from the echo signal of the first sensing reference signal. For example, the public key of the sensing transmitting device may be pre-stored on the sensing receiving device side.

Optionally, authenticating the sensing transmitting device based on the public key and the first signature may include: decrypting the first signature by signature verification algorithm based on the public key to obtain a security parameter to be verified, and authenticating the sensing transmitting device based on the security parameter to be verified and the data content used for verification. Here, authenticating the sensing transmitting device based on the security parameter to be verified and the data content used for verification may include one of: in response to the security parameter to be verified and the data content used for verification being the same, determining that the sensing transmitting device is successfully authenticated; or in response to the security parameter to be verified and the data content used for verification being different, determining that the authentication of the sensing transmitting device fails.

Optionally, authenticating the sensing transmitting device based on the public key and the first signature may include: performing a hash computation by signature verification algorithm based on the data content used for verification to obtain a verification hash value; decrypting the first signature based on the public key to obtain a decrypted value; and authenticating the sensing transmitting device based on the decrypted value and the verification hash value. Authenticating the sensing transmitting device based on the decryption value and the verification hash value may include at least one of: in response to that the decryption value and the verification hash value are the same, determining that the sensing transmitting device is successfully authenticated; or in response to that the decryption value and the verification hash value are different, determining that the authentication of the sensing transmitting device fails.

Furthermore, after authenticating the sensing transmitting device based on the public key and the first signature, the processing of the sensing receiving device may further include: in response to that the sensing transmitting device is successfully authenticated, obtaining the first sensing measurement data based on the echo signal of the first sensing reference signal. Additionally, the processing may further include: in response to that the authentication of the sensing transmission device fails, performing no processing on the echo signal of the first sensing reference signal, for example, discarding the echo signal of the first sensing reference signal, or obtaining the corresponding sensing measurement data without using the echo signal of the first sensing reference signal.

The description of obtaining the first sensing measurement data based on the echo signal of the first sensing reference signal is the same as that in the above embodiments, and will not be repeated.

In an embodiment, the first sensing reference signal is obtained based on a first reference signal sequence, the first reference signal sequence is obtained by encryption calculation based on a shared key and a reference signal sequence; the shared key is shared between the sensing receiving device and the sensing transmitting device.

The reference signal sequence may be at least part of the content that needs to be carried in the first sensing reference signal.

For example, in the case where the sensing receiving device is a terminal, and the sensing transmitting device is an access network device, the first sensing reference signal is a downlink sensing reference signal, and the content that needs to be carried in the downlink sensing reference signal may include a reference signal sequence. For example, in the case where the sensing receiving device is an access network device, and the sensing transmitting device is a terminal, the first sensing reference signal is an uplink sensing reference signal, and the content that needs to be carried in the downlink sensing reference signal may include a reference signal sequence. For example, in the case where the sensing receiving device is a wireless access point (AP), and the sensing transmitting device is a station (STA), or in the case where the sensing receiving device is an STA and the sensing transmitting device is an AP, the first sensing reference signal is a PPDU (e.g., a PPDU used for sensing), and the reference signal sequence may be all the contents of all fields or the contents of a second specified field of the PPDU used for sensing. The second specified field and the first specified field may be the same, partially the same, or completely different. The second specified field may include at least one of: a field where the preamble is located, a field where the long training sequence is located, a field where the short training sequence is located, or a field where the training sequence is located. For example, the reference signal sequence may be a training sequence (TRN) in the PPDU used for sensing; for example, the reference signal sequence may be a long training sequence and/or a short training sequence in the PPDU used for sensing; for example, the reference signal sequence may be all the data content in the PPDU used for sensing. Here, since the PPDU used for sensing may have different formats depending on actual needs, all the fields that the PPDU may include, and the types or names of some specified fields are not limit or exhaustively listed in this embodiment. In actual processing, as long as at least some fields in a certain frame used for sensing may be used as the reference signal sequence, it is within the protection scope of this embodiment.

The shared key may be any of: a pre-shared key (PSK) of the sensing receiving device and the sensing transmitting device, a physical layer key generated by the sensing receiving device and the sensing transmitting device, a key derived from a root key shared by the sensing receiving device and a gateway, or a key derived from a root key shared by the sensing transmitting device and a gateway.

Optionally, the method of the sensing transmitting device calculating the first reference signal sequence may include: obtaining the first reference signal sequence by performing encryption calculation on the reference signal sequence based on the shared key.

Optionally, the method of the sensing transmitting device calculating the first reference signal sequence may include: obtaining an intermediate key by calculation based on the shared key; and obtaining the first reference signal sequence by performing encryption calculation on the reference signal sequence based on the intermediate key. Obtaining the intermediate key by calculation based on the shared key may include: obtaining the intermediate key by performing hash computation on the shared key. It should be understood that this is only an illustrative example. In actual processing, other calculation methods may be used to obtain the intermediate key by calculation based on the shared key, which are not exhaustively listed in this embodiment.

The sensing transmitting device transmitting the first sensing reference signal may refer to: obtaining the first sensing reference signal by performing modulation or other processing based on the first reference signal sequence, and transmitting the first sensing reference signal. The specific methods of modulation and other related processing performed by the sensing transmitting device are not limited in this embodiment.

In some possible examples, this embodiment may be used in conjunction with the aforementioned embodiments of similarity-based authentication sensing transmitting devices. Specifically, the processing after the sensing transmitting device is successfully authenticated by the sensing receiving device using similarity and authentication threshold may include: obtaining a second reference signal sequence by encryption calculation based on the shared key and the reference signal sequence; generating an encrypted reference signal based on the second reference signal sequence; and obtaining first sensing measurement data based on the encrypted reference signal and the echo signal of the first sensing reference signal.

Obtaining the second reference signal sequence by encryption calculation based on the shared key and the reference signal sequence may refer to: performing encryption calculation on the reference signal sequence through an encryption algorithm to obtain the second reference signal sequence.

The encryption algorithm is the same for both the sensing transmitting device and the sensing receiving device. For example, the encryption algorithm may be pre-configured on both the sensing transmitting device and the sensing receiving device, and the configuration manner of the encryption algorithm is not limited in this embodiment. Alternatively, the encryption algorithm may be pre-defined (or pre-determined) on the sensing transmitting device and configured by the sensing transmitting device for the sensing receiving device (i.e., pre-configured on the sensing receiving device side). Alternatively, the encryption algorithm may be pre-defined (or pre-determined) on the sensing receiving device and configured by the sensing receiving device for the sensing transmitting device (i.e., pre-configured on the sensing transmitting device side). All possible cases are not exhaustively listed or limited here. The reference signal sequence may be the same for both the sensing transmitting device and the sensing receiving device. That is, the reference signal sequence may be pre-configured on both the sensing transmitting device and the sensing receiving device, and the configuration manner of the encryption algorithm is not limited in this embodiment. Furthermore, the second reference signal sequence should theoretically be similar to or the same as the aforementioned first reference signal sequence.

Generating the encrypted reference signal based on the second reference signal sequence may include: obtaining the encrypted reference signal by performing modulation or other processing on the second reference signal sequence. The specific method of the sensing receiving device performs modulation or other processing on the second reference signal sequence is not limited in this embodiment, as long as the sensing receiving device and the sensing transmitting device use the same modulation manner, it is within the protection scope of this embodiment. It should also be noted that the encrypted reference signal does not need to be transmitted; that is, only an encrypted reference signal to be transmitted needs to be obtained by modulation on the sensing receiving device side.

Obtaining the first sensing measurement data based on the encrypted reference signal and the echo signal of the first sensing reference signal may refer to: calculating a channel estimation result based on the encrypted reference signal and the echo signal of the first sensing reference signal, and obtaining the first sensing measurement data based on the channel estimation result.

For example, the first sensing reference signal transmitted by the sensing transmitting device is represented as x(t); the echo signal received by the sensing receiving device is expressed by $y(t) = hx(t - \tau) + w(t)$, where h includes antenna gain, path loss, etc., $\tau$ represents time delay, and w(t) represents additive white Gaussian noise. Channel estimation (or channel estimation result) may be obtained by calculation using least squares method. For example, if the frequency domain response of the echo signal y(t) is Y(k), k is carrier, and the frequency domain response of the encrypted reference signal x'(t) is X'(k), then the channel estimation is represented as $H(k) = \frac{Y(k)}{X'(k)}$. It should be understood that the above is merely an exemplary illustration. In practical processing, any calculation manner capable of obtaining the channel estimation result may be utilized, which will not be limited or exhaustively listed in this embodiment.

The method for obtaining the first sensing measurement data based on the channel estimation result and the types of content that the first sensing measurement data may contain have been described in detail in the aforementioned embodiments, and will not be repeated here.

In some possible examples, this embodiment may be used in conjunction with the aforementioned embodiments in which the sensing transmitting device is authenticated based on the first signature. In this example, the reference signal sequence may be the same as, or at least partially the same as, the data used for verification; the relationship between the two is not limited or exhaustively described here.

After authenticating the sensing transmitting device based on the public key and the first signature, the processing of the sensing receiving device may further include: obtaining a second reference signal sequence by encryption calculation based on the shared key and the reference signal sequence; generating an encrypted reference signal based on the second reference signal sequence; and obtaining first sensing measurement data based on the echo signal of the encrypted reference signal and the first sensing reference signal. The specific details of the above processing are the same as those in the aforementioned embodiments, and therefore will not be repeated.

In some possible implementations, relevant configuration information is obtained in advance on the sensing transmitting device and/or sensing receiving device side before performing authentication processing, which is described in conjunction with different scenarios in this implementation.

In a first scenario, the sensing receiving device is a terminal, and the sensing transmitting device is an access network device.

In an example, the sensing function entity pre-configures sensing assistance information for the sensing receiving device.

That is, not only at least one of the authentication threshold and authentication time interval is pre-configured on the sensing receiving device side, but also at least one of the authentication threshold and authentication time interval may be included in the sensing assistance information and pre-configured on the sensing receiving device side.

Specifically, the sensing assistance information includes at least one of: the authentication threshold, the authentication time interval, where the authentication time interval is used to determine the second sensing reference signal prior to the first sensing reference signal, and the sensing assistance information is pre-configured or pre-defined.

The aforementioned sensing assistance information may also be referred to as sensing assistance data, sensing assistance related data, or sensing assistance related information, etc.

Optionally, the aforementioned sensing assistance information may further include: a calculation manner of the similarity.

Optionally, the aforementioned sensing assistance information may further include at least one of: a sensing service identification, a sensing algorithm, and a sensing measurement parameter type. The sensing service identification may refer to an identification of the sensing task or sensing service performed currently (for example, representing the sensing service ID); the sensing algorithm may include one or more sensing algorithms that are required or may be used to perform the current sensing service or sensing task, and the sensing algorithm may be indicated by at least one of the identification, name, number of each sensing algorithm of the one or more sensing algorithms; the sensing measurement parameter type may include one or more parameter types that are required or need to be measured to perform the current sensing service or sensing task.

The processing of the sensing receiving device may further include: reporting a capability of the sensing receiving device to a sensing function entity, where the capability of the sensing receiving device is used to determine the sensing assistance information.

The aforementioned capability may specifically refer to sensing capability. For example, the capability of the sensing receiving device may refer to the sensing capability of the sensing receiving device; the capability of the sensing transmitting device may refer to the sensing capability of the sensing transmitting device.

In an example in which the sensing receiving device is a terminal, the sensing capability of the terminal includes at least one of: a supported sensing measurement result, a supported calculation of sensing result, a processing capability of receiving a sensing signal, a capability to identify sensing targets or a type of targets capable to be sensed, supported sensing accuracy, and a wireless capability.

The supported sensing measurement result may refer to the sensing measurement result supported or allowed by the terminal, for example, measuring at least one of the departure angle, arrival angle, and time delay. Alternatively, the supported sensing measurement result may refer to the range of sensing measurement result supported or allowed by the terminal, for example, measuring at least one of the range of departure angle, the range of arrival angle, and the range of time delay.

The supported calculated sensing result may refer to the sensing result supported or allowed to be calculated by the terminal. The sensing result may specifically refer to the type of sensing result, such as at least one of the distance of the target (or the sensing target), the speed of the target (or the sensing target), the angle of the target (or the sensing target), etc.

The processing capability of receiving the sensing signal (or sensing reference signal) may refer to the processing capability of receiving the sensing signal (or sensing reference signal) supported or allowed by the terminal, or may refer to the related processing capability of the sensing reference signal supported or allowed by the terminal, such as at least one of a maximum number of targets that the terminal is capable to sense simultaneously, a maximum distance that the terminal is capable to sense.

The capability to identify sensing target or the type of the target capable to be sensed may refer to the capability to identify the target or the type of the target capable to be sensed that is supported or allowed by the terminal. For example, the terminal may only support sensing certain specific type(s) of targets, and the certain specific type(s) of targets may be at least one such as a target area, or a target device.

The wireless capability include at least one of: bandwidth supporting signal transmission and reception, processing capability supporting signal transmission and reception, and supported beam scanning function.

The capability of the sensing transmitting device is similar to those in the examples above, which will not be repeated here.

For example, reporting the capability of the sensing receiving device to the sensing function entity may refer to: the sensing receiving device reporting the capability of the sensing receiving device to the sensing function entity via the sensing transmitting device. In this case, the sensing receiving device may report the capability via an access stratum (AS) signaling or message.

Accordingly, the processing of the sensing transmitting device may include: receiving the capability of the sensing receiving device; and transmitting the capability of the sensing receiving device to the sensing function entity. In addition, the processing of the sensing transmitting device may further include: transmitting the capability of the sensing transmitting device to the sensing function entity. It should be noted that the execution order of the sensing transmitting device transmitting the capability of the sensing transmitting device to the sensing function entity and transmitting the capability of the sensing receiving device to the sensing function entity is not important, for example, the two may be performed simultaneously or separately, which is within the scope of protection of this embodiment and is not limited thereto.

For example, reporting the capability of the sensing receiving device to the sensing function entity may refer to: the sensing receiving device directly reporting the capability of the sensing receiving device to the sensing function entity. In this example, the sensing receiving device may report the capability via non access stratum (NAS) signaling or message.

In this example, the sensing transmitting device may simply act as a signaling forwarding device, and its specific processing is not limited. In addition, the processing of the sensing transmitting device described in this example may further include: transmitting the capability of the sensing transmitting device to the sensing function entity. The order of execution between the sensing transmitting device transmitting the capability of the sensing transmitting device to the sensing function entity and the sensing receiving device directly reporting the capability of the sensing receiving device to the sensing function entity may be arbitrary; for example, the two executions may be performed simultaneously or separately, which is within the scope of protection of this embodiment and is not limited thereto. That is, the terminal directly reports the capability of the terminal to the sensing function entity; the access network device may also report the capability of the access network device to the sensing function entity.

After receiving the capability of the sensing receiving device, the sensing function entity may determine the sensing assistance information that matches the capability of the sensing receiving device and transmit the sensing assistance information to the sensing receiving device. The processing of the sensing receiving device may include: receiving sensing assistance information from the sensing function entity, i.e., receiving the sensing assistance information configured by the sensing function entity.

It should also be noted that the sensing function entity may receive the capability of the sensing receiving device and the capability of the sensing transmitting device. Therefore, the sensing function entity may combine the capability of the sensing receiving device and the capability of the sensing transmitting device to jointly determine the sensing assistance information.

Regarding the specific method for the sensing capability entity to determine the authentication threshold, it may be determined by the authentication function entity based on historical statistical information. For example, the authentication threshold may be obtained based on statistics of multiple sensing measurement parameters obtained by the sensing receiving device in the past. This statistical method may be set according to the actual situation, and is not limited or exhaustively listed here.

The sensing assistance information may be transmitted from the sensing function entity to the sensing receiving device via non-access stratum (NAS) signaling or message. Alternatively, the sensing function entity may transmit sensing assistance information to the sensing receiving device via the sensing transmitting device; correspondingly, the sensing receiving device receives sensing service information from the sensing transmitting device, where the sensing assistance information may be carried by downlink AS signaling or message.

That is, the terminal reports the capability of the terminal to the sensing function entity via the access network device; correspondingly, the access network device receives the terminal of the terminal, and reports the capability of the terminal to the sensing function entity. In addition, the access network device may also report the capability of the access network device to the sensing function entity. The sensing function entity may obtain sensing assistance information based on the combination of the capability of the terminal and the capability of the access network device (or based on only the capability of the terminal), and then configure the sensing assistance information to the terminal.

In another example, a calculation method of the similarity, the authentication threshold, and an authentication time interval are not limited to which information(s) are configured for the sensing receiving device. For example, the calculation method of the similarity, the authentication threshold, and the authentication time interval may be configured to the sensing receiving device using the same information; for another example, the calculation method of the similarity, the authentication threshold, and the authentication time interval may be configured to the sensing receiving device using different information; for yet another example, some of the calculation method of the similarity, the authentication threshold, and the authentication time interval may be configured to the sensing receiving device using one piece of information, while the other of the calculation method of the similarity, the authentication threshold, and the authentication time interval may be configured to the sensing receiving device using other information.

In this example, the processing of the sensing receiving device may also include: reporting the capability of the sensing receiving device to the sensing function entity; the capability of the sensing receiving device are used to determine the calculation method of the similarity, the authentication threshold, and the authentication time interval. The description of the capability of the sensing receiving device reported to the sensing function entity, as well as the specific description of the capability, are the same as in the aforementioned embodiments and will not be repeated here.

After receiving the capability of the sensing receiving device, the sensing function entity may determine the calculation method of the similarity, the authentication threshold, and the authentication time interval that match the capability of the sensing receiving device, and then the sensing function entity may transmit the calculation method of the similarity, the authentication threshold, and the authentication time interval to the sensing receiving device via the same or different information.

That is, the terminal reports the capability of the terminal to the sensing function entity via the access network device; correspondingly, the access network device receives the terminal of the terminal, and reports the capability of the terminal to the sensing function entity. In addition, the access network device may also report the capability of the access network device to the sensing function entity. The sensing function entity may determine the calculation method of the similarity, the authentication threshold, and the authentication time interval base on the combination of the capability of the terminal and the capability of the access network device (or only based on the capability of the terminal), and then configure the calculation method of the similarity, the authentication threshold, and the authentication time interval to the terminal via the same information or different information.

It should also be noted that the above calculation method of the similarity does not have to be configured by the sensing function entity to the terminal. That is, the terminal may determine which calculation method of the similarity to use based on its own capability, which will not be limited or exhaustively listed here.

In some possible examples, the sensing receiving device and/or sensing transmitting device may also be pre-configured or pre-defined with other relevant parameters.

On the sensing receiving device side, the encryption algorithm is pre-configured. On the sensing transmitting device side, the encryption algorithm is pre-defined; the encryption algorithm is pre-determined on the sensing transmitting device side; for example, the sensing transmitting device may pre-determine the encryption algorithm based on the capability of the sensing receiving device and/or the capability of the sensing transmitting device. The encryption algorithm may be an algorithm by performing, by the sensing transmitting device and the sensing receiving device in the above embodiments, encryption calculation on the reference signal sequence.

Specifically, the processing of the sensing transmitting device may further include: transmitting first algorithm configuration information to the sensing receiving device; the first algorithm configuration information is used to determine the encryption algorithm, and the encryption algorithm is determined based on the capability of the sensing receiving device and/or the capability of the sensing transmitting device. Correspondingly, the processing of the sensing receiving device may further include: receiving first algorithm configuration information from the sensing transmitting device.

The method of obtaining the capability of the sensing receiving device on the sensing transmitting device side has been described in detail in the aforementioned embodiments and will not be repeated here. On the sensing transmitting device side, the method of determining the encryption algorithm based on the capability of the sensing receiving device and/or the capability of the sensing transmitting device is not limited in this embodiment, as long as the finally determined encryption algorithm is an algorithm that both the sensing receiving device and the sensing transmitting device may support or perform, it is within the protection scope of this embodiment.

The first algorithm configuration information may include at least one of an identification of the encryption algorithm, the number of the encryption algorithm, a specific content of the encryption algorithm, a function used by the encryption algorithm, and a name of the encryption algorithm.

That is, the terminal reports the capability of the terminal to the sensing function entity via the access network device; correspondingly, the access network device may determine the encryption algorithm by combining the capability of the access network device and the capability of the terminal, and then transmit the first algorithm configuration information to the terminal, so that the terminal determines the same encryption algorithm as the access network device.

In this scenario, on the sensing receiving device side, the relevant configuration information of the sensing reference signal is pre-configured. On the sensing transmitting device side, the relevant configuration information of the sensing reference signal is pre-defined; the relevant configuration information of the sensing reference signal on the sensing transmitting device side is pre-determined. For example, the sensing transmitting device may predetermine the relevant configuration information of the sensing reference signal based on the capability of the sensing receiving device and/or the capability of the sensing transmitting device.

Specifically, the processing of the sensing transmitting device may further include: transmitting relevant configuration information of the sensing reference signal to the sensing receiving device; the relevant configuration information of the sensing reference signal may include at least one of: time domain resource indication information of the sensing reference signal, frequency domain resource indication information of the sensing reference signal, spatial domain resource indication information of the sensing reference signal, and transmission mode indication information of the sensing reference signal. Correspondingly, the processing of the sensing receiving device may further include: receiving relevant configuration information from the sensing reference signal from the sensing transmitting device.

The time domain resource indication information of the sensing reference signal may refer to the time domain resource occupied by each sensing reference signal in the aforementioned embodiments. For example, the time domain resource indication information of the sensing reference signal may include the time domain resource occupied by each sensing reference signal; or the time domain resource indication information of the sensing reference signal may include the time interval between any two adjacent sensing reference signals, etc., which are not limited here.

The frequency domain resource indication information of the sensing reference signal may be used to indicate the frequency domain resource occupied by each sensing reference signal in the aforementioned embodiments. For example, each sensing reference signal may occupy the same frequency domain resource, in which case the frequency domain resource indication information of the sensing reference signal may only include one piece of frequency domain resource information. Alternatively, different sensing reference signals may occupy different frequency domain resources, and the frequency domain resource indication information of the sensing reference signal may include the frequency domain resource occupied by each sensing reference signal, which is not limited here.

The spatial resource indication information of the sensing reference signal may be used to indicate the spatial resource indication information of each sensing reference signal in the aforementioned embodiments. For example, the spatial resource of each sensing reference signal may be the same, in which case the spatial resource indication information of the sensing reference signal may include only one piece of spatial resource information. Alternatively, the spatial resource of different sensing reference signals may be different, and the spatial resource indication information of the sensing reference signal may include the spatial resource of each sensing reference signal, which is not limited here.

The transmission mode indication information of the sensing reference signal may include one of: periodic transmission, semi-persistent transmission, or non-periodic transmission.

Optionally, the relevant configuration information of the sensing reference signal may further include at least one of: resource repetition factor, transmission period (the transmission mode is periodic transmission), or muting pattern-pat.

The repetition factor is used to indicate the number of resource repetitions of the resource reference signal. For example, the resources of the sensing reference signal (time domain resource and/or frequency domain resource) may constitute a resource set, and the repetition factor is used to indicate the number of resource repetitions of each sensing reference signal in an instance of the resource set. In an example in which the downlink sensing reference signal is specifically DL-PRS, the repetition factor refers to how many times each DL-PRS resource is repeated for an instance of the DL-PRS resource set.

The transmission period may be configured when the transmission mode of the sensing reference signal is periodic transmission.

The silence information may indicate resource position where it is not expected to transmit the sensing reference signal. Furthermore, the silence information may specifically indicate a bitmap of the time domain position (and/or frequency domain position) where the sensing reference signal is not expected to be transmitted at a resource (e.g., a time domain resource and/or a frequency domain resource) where the sensing reference signal should be transmitted. In an example in which the downlink sensing reference signal is specifically DL-PRS, the silence information refers to the bitmap of the time position of the DL PRS source that is not expected to be transmitted for the DL PRS resource set. Configuring the silence information may reduce interference. Specifically, by configuring the silence information, it may be possible to control that the sensing reference signal is not transmitted at the time frequency resource position where the sensing reference signal should be transmitted, and other reference signals are transmitted at the same time frequency resource position, or may PRS is transmitted by multiple transmit receive points (TRPs) at the same time frequency resource. Thus, it may be possible to reduce interference to other reference signals or PRS transmitted by multiple TRPs on the same time frequency resource.

The method of obtaining the capability of the sensing receiving device on the sensing transmitting device side has been described in detail in the aforementioned embodiments and will not be repeated here. On the sensing transmitting device side, the method of determining the relevant configuration information of the sensing reference signal based on the capability of the sensing receiving device and/or the capability of the sensing transmitting device is not limited in this embodiment, as long as both the sensing receiving device and the sensing transmitting device can obtain the relevant configuration information of the same sensing reference signal, it is within the protection scope of these embodiments.

That is, the terminal reports the capability of the terminal to the sensing function entity via the access network device; correspondingly, the access network device may determine the relevant configuration information of the sensing reference signal based on both the capability of the access network device and the capability of the terminal, and then transmit the relevant configuration information of the sensing reference signal to the terminal, so that the terminal determines the relevant configuration information of the same sensing reference signal as the access network device.

In the above scenario, the first algorithm configuration information and the relevant configuration information of the sensing reference signal may be carried in the same piece of information or message. For example, the sensing transmitting device may transmit a first message to the sensing receiving device, the first message carries the first algorithm configuration information and the relevant configuration information of the sensing reference signal; the first message may be any type of downlink AS message, for example, any one of radio resource control (RRC) message, or downlink control information (DCI).

In the above scenario, the first algorithm configuration information and the relevant configuration information of the sensing reference signal may be carried in different pieces of information or messages. For example, the sensing transmitting device may transmit a first message to the sensing receiving device, the first message carries the first algorithm configuration information; and the sensing transmitting device may transmit a second message to the sensing receiving device, the second message carries the relevant configuration information of the sensing reference signal. The first message and the second message may each be any type of downlink AS message, for example, any one of radio resource control (RRC) message, or downlink control information (DCI); and the first message and the second message occupy different time domain ranges, the first message may be earlier than the second message, or the first message may be later than the second message, and all possible cases are not exhaustively listed here.

In some possible examples, the processing of the sensing receiving device may further include: receiving a sensing service request from a sensing function entity via a sensing transmitting device, where the sensing service request may be used to trigger the execution of a sensing service (or sensing task). Alternatively, the execution of a sensing service may be triggered by the sensing receiving device. For example, the sensing receiving device may transmit a sensing service request to the sensing transmitting device (or to the sensing function entity via the sensing transmitting device) to trigger the execution of the sensing service.

The sensing service request may carry at least one of: a sensing service identification, or a sensing transmitting device identification, etc.

After receiving (or transmitting) a sensing service request, the sensing receiving device may further perform the processing of reporting the capability of the sensing receiving device, which will not be repeated here.

In a second scenario, the sensing receiving device is an access network device, and the sensing transmitting device is a terminal.

In an example, the sensing assistance information is configured by the sensing function entity for the sensing receiving device.

The processing of the sensing transmitting device may further include: transmitting a capability of the sensing transmitting device to the sensing receiving device. The processing of the sensing receiving device may further include: receiving the capability of the sensing transmitting device; and reporting the capability of the sensing transmitting device to the sensing function entity, where the capability of the sensing transmitting device is used to determine the sensing assistance information. In this case, the sensing transmitting device may report the capability via an access stratum (AS) signaling or message.

In addition, the processing of the sensing receiving device may further include: transmitting a capability of the sensing receiving device to a sensing function entity. It should be noted that the execution order of the sensing receiving device transmitting the capability of the sensing receiving device to the sensing function entity and transmitting the capability of the sensing transmitting device to the sensing function entity is not important, for example, the two may be performed simultaneously or separately, which is within the scope of protection of this embodiment and is not limited thereto.

The description of the capability is the same as that in the aforementioned embodiments, and will not be repeated here.

After receiving the capability of the sensing transmitting device, the sensing function entity may determine the sensing assistance information that matches the capability of the sensing transmitting device, and then transmit the sensing assistance information to the sensing receiving device. The specific processing method for the sensing capability entity to determine the sensing assistance information is not limited in these embodiments.

The processing of the sensing receiving device may include: receiving the sensing assistance information from the sensing function entity, i.e., receiving the sensing assistance information configured by the sensing function entity. The sensing receiving device may receive the sensing assistance information configured by the sensing function entity via any possible signaling or message between the sensing function entity and the sensing receiving device. It should also be noted that the sensing function entity may receive the capability of the sensing receiving device and the capability of the sensing transmitting device. Therefore, the sensing function entity determines at least one of a calculation method of the similarity, the authentication threshold, and an authentication time interval based on the capability of the sensing receiving device and the functions of the sensing transmitting device. The specific method for any one of determining the similarity of the sensing entity, the authentication threshold or the authentication time interval is not limited in the embodiments.

That is, the terminal reports its own capability to the access network device, and the access network device reports the capability of the terminal to the sensing function entity. In addition, the access network device may also report the capability of the access network device to the sensing function entity. The sensing function entity may determine at least one of: a calculation method of the similarity, the authentication threshold, and an authentication time interval based on both the capability of the terminal and the capability of the access network device (or only based on the capability of the terminal), and then configure at least one of the above to the access network device via the sensing assistance information.

In another example, the calculation method of the similarity, the authentication threshold, and the authentication time interval are not limited to which information(s) are configured for the sensing receiving device are not limited.

The processing of the sensing transmitting device is the same as that in the above examples in the same scenario, and will not be repeated here. The processing of the sensing receiving device may further include: transmitting the capability of the sensing receiving device to the sensing function entity. It should be noted that the execution order of the sensing receiving device transmitting the capability of the sensing receiving device to the sensing function entity and transmitting the capability of the sensing transmitting device to the sensing function entity is not important, for example, the two may be performed simultaneously or separately, which is within the scope of protection of this embodiment and is not limited thereto.

After receiving the capability of the sensing transmitting device, the sensing function entity may determine the calculation method of the similarity, the authentication threshold, and the authentication time interval that match the capability of the sensing transmitting device, and then transmit the calculation method of the similarity, the authentication threshold, and the authentication time interval to the sensing receiving device via the same or different information.

That is, the terminal reports its own capability to the access network device, and the access network device reports the capability of the terminal to the sensing function entity. In addition, the access network device may also report the capability of the access network device to the sensing function entity. The sensing function entity may determine the calculation method of the similarity, the authentication threshold, and the authentication time interval based on both the capability of the terminal and the capability of the access network device (or only based on the capability of the terminal), and configure the calculation method of the similarity, the authentication threshold, and the authentication time interval to the access network device. It should also be noted that the above calculation method of the similarity may not be configured by the sensing function entity to the access network device. That is, the access network device itself may determine which calculation method of the similarity to use based on its own capability and/or the capability of the terminal, which will not be limited or exhaustively listed here.

In some possible examples, the sensing receiving device and/or sensing transmitting device may also be pre-configured or pre-defined with other relevant parameters.

On the sensing transmitting device side, the encryption algorithm is pre-configured. On the sensing receiving device side, the encryption algorithm is pre-defined; the encryption algorithm is pre-determined on the sensing receiving device side; for example, the sensing receiving device may pre-determine the encryption algorithm based on the capability of the sensing receiving device and/or the capability of the sensing transmitting device.

Specifically, the processing of the sensing receiving device may further include: transmitting second algorithm configuration information to the sensing transmitting device, where the second algorithm configuration information is used to determine the encryption algorithm, and the encryption algorithm is determined based on the capability of the sensing receiving device and/or the capability of the sensing transmitting device. Correspondingly, the processing of the sensing transmitting device may further include: receiving the second algorithm configuration information from the sensing receiving device.

The method of obtaining the capability of the sensing transmitting device on the sensing receiving device side has been described in detail in the aforementioned embodiments and will not be repeated here. On the sensing receiving device side, the method of determining the encryption algorithm based on the capability of the sensing receiving device and/or the capability of the sensing transmitting device is not limited in these embodiments, as long as the finally determined encryption algorithm is an algorithm that both the sensing receiving device and the sensing transmitting device may support or perform, it is within the protection scope of this embodiment.

The second algorithm configuration information may include at least one of: an identification of the encryption algorithm, a number of the encryption algorithm, a specific content of the encryption algorithm, a function used by the encryption algorithm, and a name of the encryption algorithm.

That is, the terminal reports its own capability to the access network device. The access network device may determine the encryption algorithm based on both the capability of the access network device and the capability of the terminal, and then transmit the second algorithm configuration information to the terminal, so that the terminal may determine the same encryption algorithm as the access network device.

In this scenario, the relevant configuration information of the sensing reference signal on the sensing transmitting device side is pre-configured. On the sensing receiving device side, the relevant configuration information of the sensing reference signal is pre-defined; the relevant configuration information of the sensing reference signal on the sensing receiving device side is pre-determined; for example, the sensing receiving device may predetermine the relevant configuration information of the sensing reference signal based on the capability of the sensing receiving device and/or the capability of the sensing transmitting device.

Specifically, the processing of the sensing receiving device may further include: transmitting relevant configuration information of the sensing reference signal to the sensing transmitting device, where the relevant configuration information of the sensing reference signal may include at least one of time domain resource indication information of the sensing reference signal, frequency domain resource indication information of the sensing reference signal, spatial domain resource indication information of the sensing reference signal, and transmission mode indication information of the sensing reference signal. Correspondingly, the processing of the sensing transmitting device may further include: receiving the relevant configuration information of the sensing reference signal from the sensing receiving device.

The relevant configuration information of the sensing reference signal is the same as that in the aforementioned embodiments and will not be repeated here.

That is, the terminal reports its own capability to the access network device. Correspondingly, the access network device may determine the relevant configuration information of the sensing reference signal based on the capability of the access network device and the capability of the terminal, and then transmit the relevant configuration information of the sensing reference signal to the terminal, so that the terminal may determine the same relevant configuration information of the sensing reference signal as the access network device.

In the above scenario, the second algorithm configuration information and the relevant configuration information of the sensing reference signal may be carried in the same piece of information or message. For example, the sensing receiving device may transmit a third message to the sensing transmitting device, the third message carries the second algorithm configuration information and the relevant configuration information of the sensing reference signal; where the third message may be any type of downlink AS message, such as any one of RRC message or DCI.

In the above scenario, the second algorithm configuration information and the relevant configuration information of the sensing reference signal may be carried in different pieces of information or messages. For example, the sensing receiving device may transmit a third message to the sensing transmitting device, the third message carries the second algorithm configuration information; moreover, the sensing receiving device may transmit a fourth message to the sensing receiving device, the fourth message carries the relevant configuration information of the sensing reference signal. The third message and the fourth message may each be any type of downlink AS message, and the third message and the fourth message occupy different time domain ranges, and all possible cases are not exhaustively listed here.

In some possible examples, the processing of the sensing receiving device may further include: receiving a sensing service request from the sensing function entity, where the sensing service request may be used to trigger the execution of a sensing service (or sensing task); and transmit the sensing service request to the sensing transmitting device. Alternatively, the execution of a sensing service may be triggered by the sensing transmitting device. For example, the sensing transmitting device may transmit a sensing service request to the sensing receiving device (or to the sensing function entity via the sensing receiving device) to trigger the execution of the sensing service. The aforementioned sensing service request may carry at least one of: a sensing service identification, or a sensing transmitting device identification.

After receiving (or transmitting) the sensing service request, the sensing transmitting device may also perform the processing of reporting the capability of the sensing transmitting device, which will not be repeated here.

The sensing function entity involved in the two scenarios mentioned above refer to a network element or device that can perform sensing-related processing and/or sensing-related services and/or support sensing-related functions. The sensing function entity may be deployed in one of: an application function (AF), a sensing function (SF), a sensing client, or a client UE. In some possible examples, the SF may include sensing function-control (SF-C) and/or sensing function-user (SF-U); in these examples, the sensing function entity may be deployed in the SF-C and/or SF-U.

In a possible embodiment, the sensing receiving device and the sensing transmitting device may be devices in a WLAN. The sensing receiving device is an AP, and the sensing transmitting device is a STA; alternatively, the sensing receiving device is an STA, and the sensing transmitting device is an AP. In this scenario, not only at least one of the calculation method of the similarity, the authentication threshold, and an authentication time interval is pre-configured or pre-defined on the sensing receiving device side, but also at least one of the calculation method of the similarity, the authentication threshold, and the authentication time interval may be included in the sensing assistance information and pre-configured or pre-defined on the sensing receiving device side.

In an example, the sensing assistance information may be pre-defined on the sensing receiving device side. The processing that the sensing receiving device may perform includes: configuring the sensing assistance information for the sensing transmitting device. That is, the sensing assistance information on the sensing transmitting device side may be pre-configured by the sensing receiving device.

The sensing assistance information may include at least one of: the authentication threshold, or the authentication time interval. The sensing assistance information may be carried by a trigger frame (e.g., a sensing polling trigger frame).

In this scenario, the sensing assistance information may also be referred to as reporting setting information.

In an example in which the sensing assistance information is specifically reporting setting information, the reporting setting information may include: authentication algorithm setting information, and authentication threshold setting information. The authentication algorithm setting information may include at least one of: the calculation method of similarity, or a reference instance selected compared to the current instance.

The reference instance selected compared to the current instance may include the authentication time domain interval.

This authentication threshold setting information is used to indicate an authentication threshold that the similarity between the sensing measurement result of the current measurement instance and the sensing measurement result of a certain previous selected measurement instance needs to meet. For example, in the case where there are multiple configurable authentication thresholds, the field may be 4 bits; in the case where the field value is 0, the similarity is required to be 100%, i.e., the authentication threshold is 0; that is, in the case where the similarity calculated as described above, such as the Euclidean distance, reaches 0, the authentication threshold is met; in the case where the field value is 0.01, the similarity is required to be greater than 99%, that is, in the case where the similarity calculated as described above, such as the Euclidean distance, is less than 0.01, the authentication threshold is met; in the case where the field value is 0.02, the similarity is required to be greater than 98%, that is, in the case where the similarity calculated as described above, such as the Euclidean distance, is less than 0.02, the authentication threshold is met; in the case where the field value is 0.1, the similarity is required to be greater than 90%; that is, in the case where the similarity calculated as described above, such as the Euclidean distance, is less than 0.1, the authentication threshold is met, and so on.

In addition, the reporting setting information may further include at least one of: a measurement instance identification, a measurement setting identification, and an authentication feedback identification.

The measurement instance identification is used to identify measurement instances, such as the identification of the current sensing task or the identification of an instance of measurement performed for the sensing task.

The measurement setting identification is used to identify the measurement setting used by the measurement instance. For example, the measurement setting identification may include at least one of: one or more sensing algorithms that are required or capable of being used to perform the current sensing service or sensing task, or one or more parameter types that are required or need to be measured to perform the current sensing service or sensing task.

The authentication feedback identification may be used to indicate the authenticity of the current measurement instance, and the data type of the authentication feedback identification may be Boolean. For example, the authentication feedback identification may indicate whether the similarity between the current measurement instance and a certain previous specific measurement instance is greater than the authentication threshold setting information. If yes, it is a first value; if no, it is a second value. The first value and the second value are different. For example, the first value may be 1 or other values, and the second value may be 0 or other values. As long as the first value and the second value are different, they are within the protection scope of this embodiment, and are not exhaustively listed here. That is, the sensing receiving device may indicate whether the similarity obtained from any measurement meets the authentication threshold by reporting the first value or the second value.

Optionally, after receiving the sensing assistance information configured by the sensing receiving device on the sensing transmitting device side, the sensing transmitting device may further perform the following processing: transmitting reporting information to the sensing receiving device, where the reporting information may include at least one of: a reference instance selected compared to the current instance, a measurement instance identification, a measurement setting identification, or an authentication feedback identification.

The reporting information may be carried by a feedback frame (e.g., a clear to send (CTS)-to-self frame).

The related descriptions for the calculation method of the similarity, the reference instance selected compared to the current instance, the measurement instance identification, the measurement setting identification, and the authentication feedback identification are all the same as those in the aforementioned embodiments, and will not be repeated here.

That is, in this example, after being configured with sensing assistance information, the sensing transmitting device may also transmit the same reporting information to the sensing receiving device, the function of which may be to make the sensing receiving device confirm that the sensing transmitting device has obtained the above configuration information, or to make the sensing receiving device determine again whether the configurations of both parties are the same, and all possible functions or effects are not exhaustively listed or limited here.

Optionally, the encryption algorithms may be pre-configured or pre-defined by the sensing receiving device and/or sensing transmitting device. For example, the encryption algorithm may be pre-defined on the sensing receiving device side, and the encryption algorithm may also be included in the reporting setting information; correspondingly, the encryption algorithm in the reporting setting information may be received on the sensing transmitting device side. In addition, the above encryption algorithm may be included in the reporting information on the sensing transmitting device side. For example, both the sensing receiving device and the sensing transmitting device may pre-store the same default encryption algorithm.

Regardless of the method used, as long as the sensing receiving device and the sensing transmitting device use the same encryption algorithm, they are within the protection scope of the embodiments.

In an example, the sensing assistance information may be pre-defined on the sensing transmitting device side. The sensing assistance information may include at least one of the authentication threshold or the authentication time interval. The processing that the sensing transmitting device may perform includes: configuring the sensing assistance information for the sensing receiving device. That is, the sensing assistance information on the sensing receiving device side may be pre-configured by the sensing transmitting device. The sensing assistance information may be carried by a trigger frame (e.g., a sensing polling trigger frame). In this scenario, the sensing assistance information may also be referred to as reporting setting information. The description of the reporting setting information is the same as that in the aforementioned embodiments, and will not be repeated here.

Optionally, after receiving the sensing assistance information configured by the sensing transmitting device on the sensing receiving device side, the sensing receiving device may further perform the following processing: transmitting reporting information to the sensing transmitting device. The reporting information may be carried by a feedback frame (e.g., a clear to send (CTS)-to-self frame). The content included in the reporting information is the same as that in the aforementioned embodiments and will not be described again. In this example, after being configured with the sensing assistance information, the sensing receiving device may also transmit the same reporting information to the sensing transmitting device, the function of which may be to make the sensing transmitting device confirm that the sensing receiving device has obtained the above configuration information, or to make the sensing transmitting device determine again whether the configurations of both parties are the same, and all possible functions or effects are not exhaustively listed or limited here.

Optionally, the sensing receiving device and/or sensing transmitting device may also be pre-configured or pre-defined with encryption algorithms. For example, the encryption algorithm may be pre-defined on the sensing transmitting device side, and the encryption algorithm may be included in the reported setting information; correspondingly, the encryption algorithm in the reporting setting information may be received on the sensing receiving device side. In addition, the sensing receiving device may also include the above encryption algorithm in the reporting information. For another example, both the sensing receiving device and the sensing transmitting device may pre-store the same default encryption algorithm. Regardless of the method used, as long as the sensing receiving device and the sensing transmitting device ultimately use the same encryption algorithm, they are within the protection scope of this embodiment.

A possible architecture of the authentication method provided in the embodiments with reference to FIG. 4 is described. FIG. 4 illustrates a downlink sensing scenario of NR downlink. In FIG. 4, the base station is the aforementioned sensing transmitting device, and the UE is the aforementioned sensing receiving device. Communication signals may be transmitted between the base station and the UE. The base station transmits sensing reference signals (e.g., DM-RS, CSI-RS, or PRS), and the UE receives and measures an echo signal reflected after passing through a sensing target (simply represented as the target in FIG. 4). To ensure the authenticity of the sensing signal, the receiving end UE calculates the similarity between multiple physical layer attributes measured in the current slot and multiple physical layer attributes measured in a previous slot, and compares the similarity with the authentication threshold transmitted by an SF to determine the source of the sensing signal (for example, determining whether the source of the sensing reference signal is legitimate, or determining whether the sensing reference signal comes from a legitimate base station). Since the relevant attributes (e.g., at least one of an average vector $\mu$ and a covariance matrix $\Sigma$) of the multi-attribute sensing measurement parameters obtained by the receiving end are different in the case where the transmitting end transmits the sensing reference signal at different positions and different devices, the transmitting end of the sensing reference signal may be authenticated by using the multi-attribute sensing measurement.

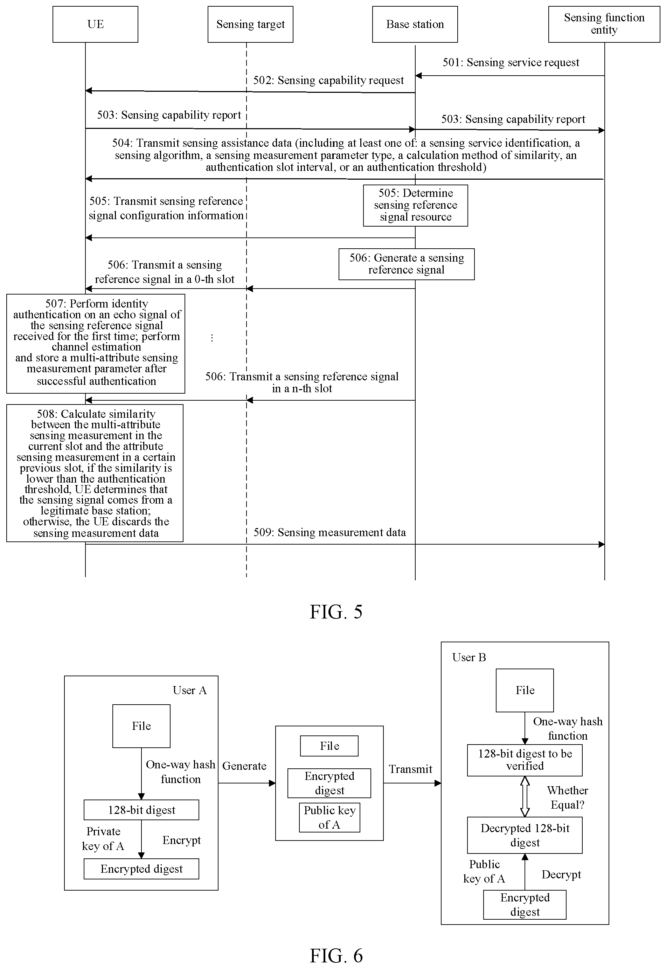

Based on the scenario in FIG. 4, and in conjunction with FIG. 5, the aforementioned authentication method will be exemplarily illustrated by taking an example in which the base station is the aforementioned sensing transmitting device and the UE is the aforementioned sensing receiving device.

In step 501, a sensing function entity (which may be at least one of: an AF, an SF, a sensing client, or a client UE) transmits a sensing service request to a base station. This step is only an example. In actual processing, it may also be the UE itself triggering the sensing service request, which will not be limited or exhaustively listed here.

In step 502, the base station transmits a sensing capability request to the UE. The sensing capability request includes a sensing service identification or a base station identification.

In step 503, the UE reports a sensing capability to the base station and the sensing function entity. For example, the UE may report the sensing capability of the UE to the base station, and the base station may report the sensing capability of the UE to the sensing function entity; the base station may also report its own sensing capability to the sensing function entity, which is not limited here.

In step 504, the sensing function entity obtains sensing assistance data based on the sensing capability of the UE (or the sensing capability of the UE and the sensing capability of the gNB) and transmits the sensing assistance data to the UE. The content of the sensing assistance data include at least one of: a sensing service identification, a sensing algorithm, a sensing measurement parameter type, a calculation method (or calculation approach) of the similarity, an authentication slot interval (or authentication time domain interval), or an authentication threshold.

In step 505, the base station determines a sensing reference signal resource based on the sensing capability of the UE and transmits sensing reference signal configuration information to the UE via a RRC signaling.

The reference signal configuration information (i.e., the relevant configuration information of the sensing reference signal in the aforementioned embodiments) includes, but is not limited to, indication information of the time domain resource, frequency domain resource and spatial domain resource of the reference signal, or the reference signal transmission mode (periodic transmission, semi-persistent transmission, non-periodic transmission).

In addition, the base station may further indicate the type of the reference signal received by the UE. The reference signal may be a newly defined downlink sensing reference signal, a CSI-RS, or a DL-PRS or a DM-RS for sensing based on a downlink data channel, etc.

In step 506, the base station generates a sensing reference signal based on the sensing reference signal configuration information and transmits the sensing reference signal to a sensing target. In this step, the base station will sequentially transmit multiple sensing reference signals to the sensing target according to the sensing reference signal configuration information. In FIG. 4, for clarity, the sensing reference signals transmitted in different slots are illustrated separately. For example, in the 0-th slot, the sensing reference signal (which may be referred to as the first one of the sensing reference signals) is transmitted, and in the n-th slot, the sensing reference signal (which may also be referred to as an (n+1)-th one of the sensing reference signals) is transmitted, where n is an integer greater than or equal to 1.

Here, since the 0-th slot requires higher-level authentication, the generation and/or authentication process of the sensing reference signal in the 0-th slot and subsequent slots may differ, which refers to the description of step 507 for details.

In step 507, the UE performs identity authentication on an echo signal of the sensing reference signal received for the first time by using the high-layer cryptography techniques; and after successful authentication, performs channel estimation and stores the multi-attribute sensing measurement parameters.

In the case where the UE receives the echo signal of the sensing reference signal received for the first time in 0-th slot, high-layer cryptographic techniques may be used for identity authentication.

Method 1: utilizing a digital signature approach. In this case, the UE and the base station are assigned public and private keys. The base station calculates a first signature for hash message of the first sensing reference signal by using the private key, and then transmits the first one of the sensing reference signals to the UE. After receiving the echo signal of the first one of sensing reference signals, the UE verifies the first signature by using the public key. For example, referring to FIG. 6, an exemplary description of the calculation and verification methods of signature is illustrated: a user A (e.g., the base station in this example) calculates a one-way hash function on a file to generate a 128-bit digest, and encrypts the 128-bit digest using the private key of A to obtain an encrypted digest. The user A transmits the file, the encrypted digest, and public key of A (optional) to a user B. After receiving the file, the user B (e.g., the UE in this example) also calculates a one-way hash function on a file to generate a 128-bit digest to be verified, decrypts the encrypted digest by using the public key of A to obtain a decrypted 128-bit digest, and then determines whether the decrypted 128-bit digest and the 128-bit digest to be verified are equal. If they are equal, the verification passes; otherwise, the verification fails.

Method 2: the sensing assistance data transmitted by the sensing function entity includes referenced multi-attribute sensing measurement $H^r$ (i.e., a sensing reference parameter). After receiving the echo signal of the sensing reference signal for the first time, the UE performs channel estimation to obtain $H[0]$, and then calculates the similarity between $H[0]$ and the reference multi-attribute sensing measurement $H^r$ to determine whether the sensing signal received for the first time is legitimate. The method requires that a sensing service process has been established previously.

Method 3: the first one of the sensing reference signals is obtained based on a first reference signal sequence, the first reference signal sequence is obtained by encryption calculation based on a shared key and a reference signal sequence. The shared key is shared by the base station and the UE. After the UE receives the echo signal of the first one of the sensing reference signals, subsequent processing may be performed in combination with Method 1 or Method 2, and the specific descriptions of which are the same as those in the above embodiments and will not be repeated.

The aforementioned multi-attribute sensing measurement parameter may be at least one (preferably at least two) of CSI (channel impulse response, or channel frequency response), RSSI, phase, Doppler shift, or angle of arrival (AOA), which are related to the sensing service type.

In step 508, the UE calculates the similarity between the multi-attribute sensing measurement in the current slot and the attribute sensing measurement in a previous slot according to the sensing function entity instruction. If the similarity is lower than the authentication threshold, the UE determines that the sensing signal comes from a legitimate base station; otherwise, the UE discards the sensing measurement data.

Here, in the calculation of the similarity of multi-attribute sensing measurement, the slot interval between the current measurement (i.e., an echo signal of the sensing reference signal other than the first one of the sensing reference signals) and a previous slot measurement is flexibly determined by an SF. The slot interval may be two adjacent slots (higher authentication accuracy) or multiple slots apart (lower authentication accuracy).

Here, the similarity $diff(H[n], H[n - l])$ represents the degree of similarity between the multi-attribute sensing measurement in the $n$-th slot and the multi-attribute sensing measurement in the $(n - l)$-th slot, where $l$ is the slot interval, $l = 1$ represents using consecutive slots for physical layer authentication. For example, in the $n$-th slot, the UE obtains the sensing measurement parameter as $H[n] = [H_1[n], H_2[n], ... , H_M[n]]$, where M is the number of sensing measurement attributes. The similarity between $H[n]$ and $H[n - 1]$ may be indicated by Euclidean distance, Manhattan distance, Chebyshev distance, or cosine distance. The specific calculation methods for various distance have been detailed in the aforementioned embodiments and will not be repeated here.

In the $n$-th slot, the UE performs the following decision $diff(H[n], H[n - l]) \leq \eta$, where $\eta$ is the authentication threshold parameter transmitted by the SF, which is a real number greater than 0 and less than 1. The smaller the value of $\eta$, the higher authentication accuracy. The value of $\eta$ is determined by the sensing function entity based on historical statistical information (e.g., historical CSI).

In step 509, after performing multiple measurements and authentications, the UE obtains and stores the sensing measurement data, and transmits the obtained sensing measurement data to the sensing function entity. Specifically, the UE performs multiple measurements and authentications to obtain all the sensing measurement data in the case of successful authentication, and then directly transmits all the obtained sensing measurement data to the sensing function entity; alternatively, the UE performs multiple measurements and authentications to obtain all the sensing measurement data in the case of successful authentication, processes all the obtained sensing measurement data to obtain the sensing measurement result, and transmits the sensing measurement result to the sensing function entity.

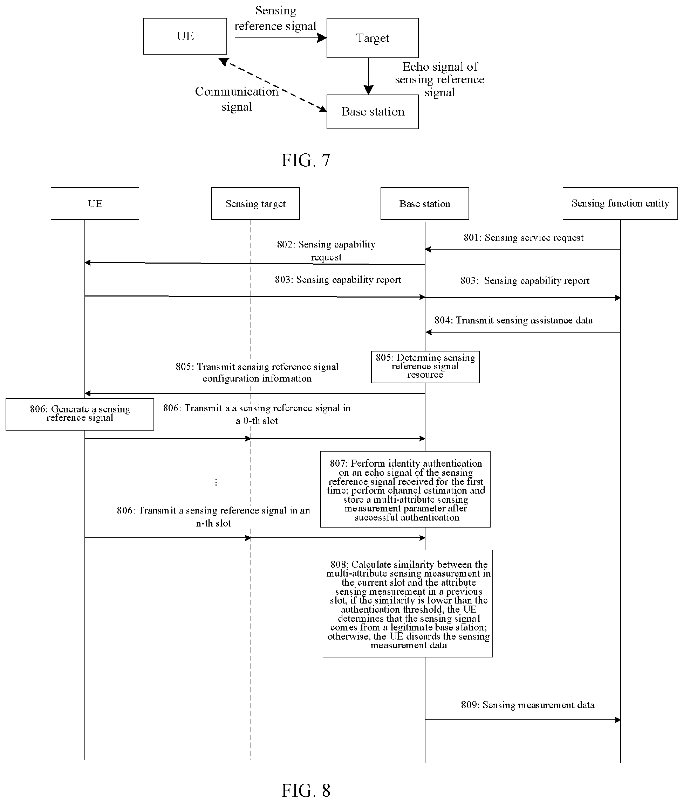

Another possible architecture of the authentication method provided in the embodiments with reference to FIG. 7 is described. FIG. 7 illustrates an uplink sensing scenario of an NR uplink (the UE transmitting and the base station receiving, PUSCH channel). In FIG. 7, the base station is the aforementioned sensing receiving device, and the UE is the aforementioned sensing transmitting device. Communication signals may be transmitted between the base station and the UE. The UE transmits a sensing reference signal (which may also be DM-RS, or SRS), and the base station receives and measures the echo signal reflected after passing through the sensing target (simply represented as the target in FIG. 7). To ensure the authenticity of the sensing signal, the receiving end base station calculates the similarity between multiple physical layer attributes measured in the current slot and multiple physical layer attributes measured in a previous slot, and compares the similarity with the threshold transmitted by the authentication function entity to determine the source of the sensing reference signal.

Based on the scenario in FIG. 7, and in conjunction with FIG. 8, the aforementioned authentication method will be exemplarily illustrated by taking an example in which the UE is the aforementioned sensing transmitting device and the base station is the aforementioned sensing receiving device.

Step 801 to step 803 are the same as step 501 to step 503 in the example in FIG. 5 above, and will not be repeated.

In step 804, the sensing function entity transmits sensing assistance data to the base station based on the sensing capability of the UE. The content of the sensing assistance data include at least one of: a sensing service identification, a sensing algorithm, a sensing measurement parameter type, a calculation method of the similarity (or a calculation approach of the similarity), an authentication slot interval (or an authentication time domain interval), or an authentication threshold.

Step 805 is similar to step 505 in FIG. 5, with the only difference being that the reference signal indicated by the base station for the UE to transmit is an uplink signal, such as an SRS in this example.

In step 806, the UE generates a sensing reference signal based on configuration information and transmits the sensing reference signal to a sensing target. In this step, the UE will sequentially transmit multiple sensing reference signals to the sensing target according to sensing reference signal configuration information. In FIG. 8, for clarity, the sensing reference signals transmitted in different slots are illustrated separately. For example, in the 0-th slot, a sensing reference signal (which may be referred to as a first one of the sensing reference signals) is transmitted, and in the n-th slot, a sensing reference signal (which may also be referred to as an (n+1)-th one of the sensing reference signals) is transmitted, where n is an integer greater than or equal to 1.

Here, since the 0-th slot requires higher-layer authentication, the generation and/or authentication process of the sensing reference signal in the 0-th slot may differ from that in subsequent slots, which refers to the description of step 807 for details.

In step 807, the base station performs identity authentication on an echo signal of the sensing reference signal received for the first time using the high-layer cryptography techniques; and after successful authentication, performs channel estimation and stores the multi-attribute sensing measurement parameter.

When receiving the echo signal of the sensing reference signal for the first time in the 0-th slot, the base station performs identity authentication by using the higher-layer cryptographic techniques. Method 1: using a digital signature approach; Method 2: the sensing assistance data transmitted by the sensing function entity includes the referenced multi-attribute sensing measurement $\mathbf{H}^r$ (i.e., sensing reference parameter), after receiving the echo signal of the sensing reference signal for the first time, the base station performs channel estimation to obtain $H[0]$, and then, calculates the similarity between $H[0]$ and the reference multi-attribute sensing measurement $\mathbf{H}^r$, and determines whether the sensing signal received for the first time is legitimate. Method 3: the first one of the sensing reference signals is obtained based on a first reference signal sequence, the first reference signal sequence is obtained by encryption calculation based on a shared key and a reference signal sequence. The shared key is shared between the base station and the UE. After receiving the echo signal of the first one of the sensing reference signals, the base station may perform subsequent processing in combination with Method 1 or Method 2, the specific descriptions of which are the same as those in the previous embodiments and will not be repeated. The aforementioned multi-attribute sensing measurement parameter may be CSI (channel impulse response, or channel frequency response), RSSI, phase, Doppler shift, or angle of arrival (AOA), which are related to the sensing service type.

In step 808, the base station calculates the similarity between the multi-attribute sensing measurement in the current slot and the attribute sensing measurement in a previous slot according to the instruction of the sensing function entity. If the similarity is lower than the authentication threshold, the base station determines that the sensing signal comes from a legitimate UE; otherwise, the base station discards the sensing measurement data.

In step 809, the base station performs multiple measurements and authentications to obtain the sensing measurement data, and transmits the sensing measurement data to the sensing function entity. Specifically, the base station performs multiple measurements and authentications to obtain all the sensing measurement data in the case of successful authentication, and then directly transmits all the obtained sensing measurement data to the sensing function entity; alternatively, the base station performs multiple measurements and authentications to obtain all the sensing measurement data in the case of successful authentication, processes all the obtained sensing measurement data to obtain the sensing measurement result, and transmits the sensing measurement result to the sensing function entity.

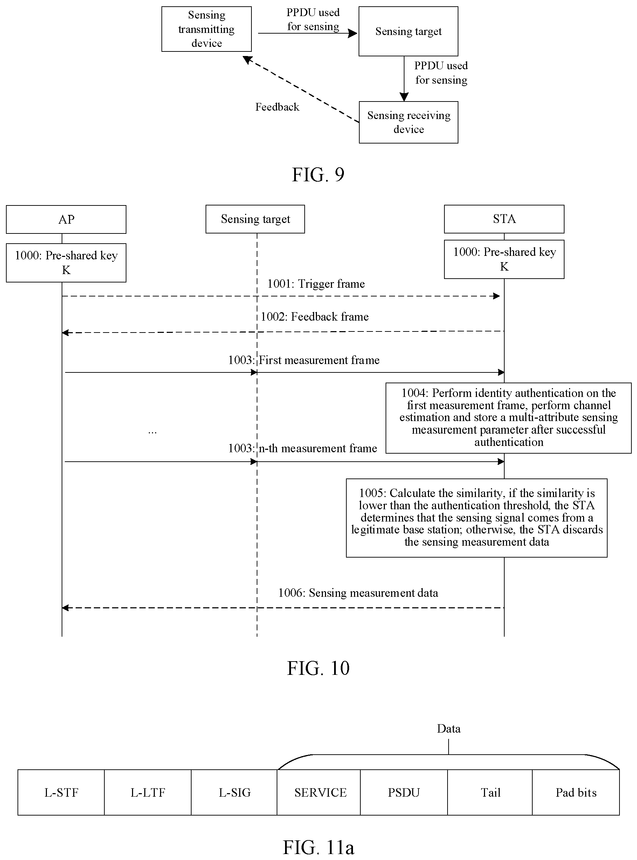

Yet another possible architecture of the authentication method provided in the embodiments with reference to FIG. 9 is described. FIG. 9 illustrates a WiFi sensing scenario, the sensing transmitting device (e.g., a sensing initiator/transmitter, specifically an AP) transmits a sensing reference signal (a PPDU used for sensing shown in FIG. 9 in this example), and the sensing receiving device (e.g., a sensing responder/receiver, specifically an STA) receives and performs sensing measurement. To ensure the authenticity of the sensing signal, the receiving end STA calculates the similarity between multiple physical layer attributes measured by the current instance and multiple physical layer attributes measured by a previous instance, and compares the similarity with the authentication threshold to determine whether the source of the sensing reference signal is legitimate.

Based on the scenario in FIG. 9, and in conjunction with FIG. 10, the aforementioned authentication method will be exemplarily illustrated by taking an example in which the AP is the aforementioned sensing transmitting device and the STA is the aforementioned sensing receiving device.

In step 1000, the AP and the STA share a key K. The key K may be a physical layer key generated by the AP and the STA, or may be a key derived from a root key shared by an LAN gateway and the STA.

In step 1001, the AP transmits a trigger frame (e.g., a sensing polling trigger frame) to the STA as a sensing service request, the request includes sensing reporting setting information. In some embodiments, the reporting setting information includes at least one of: a measurement instance identification used for identifying a measurement instance; a measurement setting identification used for identifying measurement settings used by the measurement instance; authentication algorithm setting information including the calculation method of the similarity used and the reference instance selected compared to the current instance; authentication threshold setting information indicating a threshold that the similarity between the sensing measurement result of the current measurement instance and the sensing measurement result of a previous measurement instance needs to meet, for example, in the case where there are 10 configurable thresholds, the field may be 4 bits; in the case where the field value is 0, the similarity is required to be 100%; in the case where the field value is 0.01, the similarity is required to be greater than 99%; in the case where the field value is 0.02, the similarity is required to be greater than 98%; and in the case where the field value is 0.1, the similarity is required to be greater than 90%; an authentication feedback identification used for indicating the authenticity of the current measurement instance, where the data type of the authentication feedback identification may be Boolean. For example, the authentication feedback identification may indicate whether the similarity between the current measurement instance and a specific previous measurement instance is greater than the authentication threshold setting information, where greater than is 1 and less than is 0.

In step 1002, the STA transmits a feedback frame (e.g., a clear to send (CTS)-to-self frame) to the AP according to the sensing reporting setting information of the trigger frame as a sensing service response, and the response includes sensing reporting information.

Optionally, the reporting information includes (as above, since both the AP and the STA may act as a sensing initiator/responder/transmitter/receiver) at least one of: a measurement instance identification, a measurement setting identification, authentication threshold setting information, or an authentication feedback identification.

In step 1003, the AP transmits a first measurement frame (i.e., the first one of the sensing reference signals, which may specifically be a null data PPDU (NDP)) to the STA performing the sensing measurement based on the aforementioned sensing measurement setup process, and the STA performs the measurement.

It should be noted that the AP transmits multiple sensing reference signals (i.e., multiple measurement frames) and transmit the multiple sensing reference signals to the sensing target sequentially. In FIG. 10, for clarity, different sequence numbers are used for distinction. For example, the first measurement frame is transmitted first, and then multiple measurement frames are transmitted in sequence, such as the n-th measurement frame shown in FIG. 10, where n is an integer greater than or equal to 2.

Since the first measurement frame requires higher-layer authentication, the process of generating the sensing reference signal in the first trigger frame and subsequent measurement frame is different (unless a sensing measurement instance has been established previously), which refers to step 1004 for details.

As shown in FIG. 11a, a PPDU format includes: a non-HT (legacy) short training field (L-STF), a non-HT (legacy) long training field (L-LTF), a non-HT (legacy) signal field (L-SIG), and Data (i.e., non-HT data field). The data field includes: a service field including 16 zeros and used for initializing a data scrambler; a PSDU including a PLCP service data unit (PSDU) and being a variable-length field; a tail field being a tail bit required to terminate a convolutional code and using 6 zeros for a single coding stream; and pad bits ensuring that the non-HT data field includes a variable-length field required for an integer number of symbols. In the case where the PPDU is an NDP, the data is null (empty).

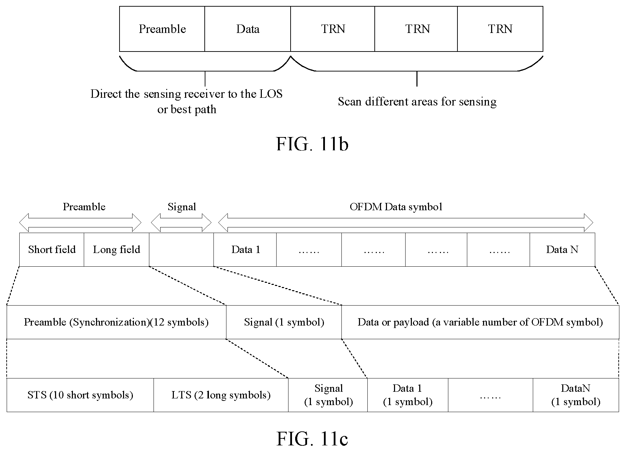

As shown in FIG. 11b, an NDP format includes: a preamble field, a data field, and multiple TRN fields; the preamble field and the data field are used to direct the sensor receiver to the los or optimal path, and the TRN is used for scanning different areas to perform sensing.

As shown in FIG. 11c, another PPDU format includes a preamble field, and the preamble field includes a long field and a short field. Specifically, the preamble field (used for synchronization of 12 symbols) includes a short training sequence (STS) field, and the STS field may include 10 short symbols; the preamble field includes a long training sequence (LTS) field, and the LTS field may include 2 long symbols. The PPDU format may further include: a signal field including 1 symbol, and data or effective payload including Data1 field to DataN field. The data or effective payload may include a variable number of OFDM symbols, with each data field including 1 OFDM symbol. In the case where the PPDU is an NDP, the data is null (empty).

In step 1004, the STA receives the first measurement frame transmitted by the AP; the STA performs identity authentication on the first measurement frame based on high-layer cryptographic techniques; and after successful authentication, the STA performs channel estimation and stores the multi-attribute sensing measurement parameter.

This step involves the STA receiving a measurement frame for the first time, and thus identity authentication is performed by using higher-level cryptographic techniques.

Method 1: utilizing a digital signature approach. In this case, the STA and the AP are assigned public and private keys. The AP performs signature on hash message of the first measurement frame by using the private key (i.e., obtains the first signature), and then transmits the first measurement frame to the STA. After receiving the first sensing frame, the STA verifies the signature of the first measurement frame by using the public key. Here, the AP may perform signature on the hash message of all fields of the first measurement frame, or perform signature on the hash message of only specific designated fields of the first measurement frame. For example, referring to FIG. 11b, a hash message may be calculated for preamble, data, and TRN, and then the hash message may be signed; or, a hash message may be calculated for preamble (i.e., the specified field being preamble) and then the hash message may be signed; or a hash message may be calculated for TRN (i.e., the specified field being TRN) and then signed. For another example, referring to FIG. 11c, a hash message may be calculated for STS field (i.e., the specified field being STS field) and then signed; or a hash message may be calculated for STS and LTS (i.e., the specified field including both STS and LTS fields) and then signed, and all possible cases are not exhaustively listed or limited here.

Method 2: the AP includes referenced historical multi-attribute sensing measurement $H^r$ in the first trigger frame. After receiving the NDP for the first time, the STA performs channel estimation to obtain $H[1]$, and then calculates the similarity between $H[1]$ and the referenced multi-attribute sensing measurement $H^r$ to determine whether the sensing signal received for the first time is legitimate. The method requires that a sensing instance process has been established in advance. The specific method for calculating similarity is the same as that in the aforementioned embodiments, and will not be repeated here.

Method 3: the AP performs encryption calculation on the reference signal sequence of the first measurement frame based on the key K and transmits the encrypted first measurement frame; the STA generates the encryption sequence that is the same as that on the AP side based on the shared key K, performs channel estimation on the encrypted first measurement frame, and then performs subsequent processing in combination with Method 1 or Method 2. The specific description is the same as the aforementioned embodiments and will not be repeated. This process implicitly verifies whether the first measurement frame is legitimate. For example, referring to FIG. 11b, the AP may encrypt the training sequence TRN into a TRN1 sequence, and then the AP transmits the encrypted NDP; the STA generates the TRN1 sequence the same as that on the AP side based on the key K, and performs channel estimation.

In step 1005, starting from the second measurement frame, the STA calculates the similarity between the sensing measurement of the current instance and the sensing measurement of a previous certain instance according to the measurement setting processes in step 1001 and/or step 1002. If the similarity is lower than the authentication threshold, the STA determines that the sensing signal comes from a legitimate AP; otherwise, the STA discards the sensing measurement data. The specific processing involved in calculating similarity in this step is the same as in the aforementioned embodiments and will not be repeated here.

In step 1006 (optionally), the STA obtains sensing measurement data and stores the sensing measurement data after performing multiple measurements and authentications, and transmits the sensing measurement data to the AP.

Specifically, the STA performs multiple measurements and authentications to obtain all the sensing measurement data in the case of successful authentication, and then transmits all the obtained sensing measurement data directly to the AP; alternatively, the STA performs multiple measurements and authentications to obtain all the obtained sensing measurement data in the case of successful authentication, processes all the obtained sensing measurement data to obtain a sensing measurement result, and transmits the sensing measurement result to the AP.

By adopting the above solutions, the sensing transmitting device is authenticated based on the echo signal of the currently received sensing reference signal on the sensing receiving device side. In this way, it may be ensured that the measurement is performed on the sensing reference signal transmitted by a legitimate device while ensuring that the sensing receiving device completes the sensing measurement, thereby ensuring the security of the sensing process.

Based on relevant technologies, the beneficial effects of the authentication method provided in the embodiments of the present application will be further analyzed and explained.

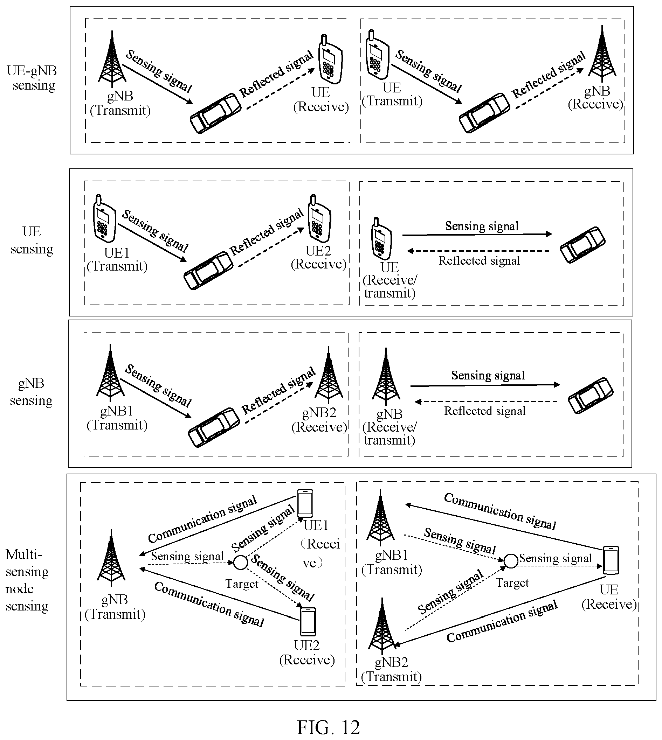

Referring to FIG. 12, the sensing scenarios may be divided into the following four categories: a first category, UE-gNB sensing, used in most sensing scenarios, which includes a scenario where the gNB transmits a sensing signal and the UE receives a reflected signal (the reflected signal being referred to as an echo signal in some possible examples) of the sensing signal, and a scenario where the UE transmits a sensing signal and the gNB receives a reflected signal of the sensing signal; a second category, UE sensing, suitable for to C mode sensing and used in indoor scenarios with limited sensing range, which includes a scenario where UE1 transmits a sensing signal and UE2 receives a reflected signal of the sensing signal, and a scenario where the UE transmits a sensing signal and receives a reflected signal of the sensing signal; a third category, gNB sensing, suitable for to B mode sensing and used in outdoor scenarios with a large sensing range, which includes a scenario where gNB1 transmits a sensing signal and gNB2 receives a reflected signal of the sensing signal, and a scenario where the gNB transmits a sensing signal and receives a reflected signal of the sensing signal; a fourth category, multi-site sensing, existing collaborative sensing between multiple sensing nodes, these sensing nodes being UEs or base stations. For example, a gNB transmits a sensing signal, and UE1 and UE2 receive the sensing signal (specifically, a reflected signal of the sensing signal). For another example, gNB1 and gNB2 transmit sensing signals, and UE receives the sensing signal (specifically, a reflected signal of the sensing signal).

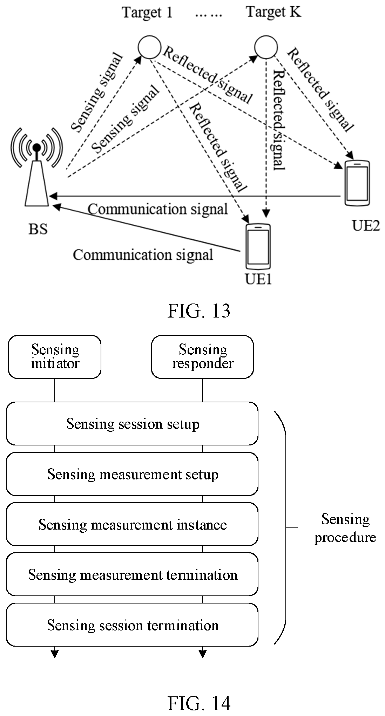

The UE uses one or more sensors in non-3GPP sensors (e.g., cameras, LiDAR, and 3GPP-based sensors) for sensing. In 3GPP 5G wireless sensing, sensing transmitters and sensing receivers sense surrounding stationary and moving objects based on time difference of arrival (TDoA), angle of arrival (AoA), angle of departure (AoD) measurement, and RSSI. Considering UE and base station (BS) sensing as an example, as shown in FIG. 13, the BS transmits sensing signals to multiple sensing targets (target 1 to target K in FIG. 13, where K is an integer greater than or equal to 2), and UE1 and UE2 may receive the reflected signals of the respective sensing signals. Transparent sensing is an example of usage, where 3GPP sensing data is captured and communicated by the sensing transmitter and/or sensing receiver, enabling the 5GS to be aware of the 3GPP sensing data, while non-3GPP sensing data is the result of non-3GPP sensors and remains transparent to the 5GS. Based on this information, service enablement procedures may be defined.

In R19, 3rd generation partnership project (3GPP) initiated researches on communication services with integrated sensing, with TR 22.837 studying sensing usage cases and related requirements. From a service perspective, sensing is an extension of positioning. Sensing services have the following characteristics: large amounts of sensing data; sensing results include various information, such as respiratory rate, heart rate, and posture in human body monitoring; environmental features in environmental monitoring; sensing objects being active devices (e.g., UEs) or passive objects (e.g., environmental sensing, human body sensing); sensing results including multiple service requirement results, such as the sensing results generated by the same sensing signaling, including respiratory rate, heart rate, and target position; and scenarios where multiple sensing nodes cooperate in sensing existing, for example, multiple UEs receiving sensing signals.

In 2020, to meet the growing demand for wireless sensing, the 802.11 working group has launched a project called 802.11bf (Wi-Fi sensing), which aims to support device-free target sensing for a wide range of usage cases. 802.11bf refers to use the wireless signals received from 802.11 stations to obtain measurements that may be useful for determining characteristics (e.g., distance, velocity, angle, detection, imaging) of intended targets (e.g., objects, people, animals, environments) in an area of interest (e.g., room, house, vehicle, enterprise). As described in the project authorization request (PAR) and criteria for standards development (CSD) documents, 802.11bf aims to develop an amendment defining modifications to the 802.11 media access control (MAC), directional multi-gigabit (DMG), and enhanced directional multi-gigabit (EDMG) physical (PHY) to enhance sensing operations in unlicensed frequency bands ranging from 1 GHz to 7.125 GHz and above 45 GHz. The amendment is expected to support various sensing applications in daily life and ensure backward compatibility and coexistence with existing or legacy 802.11 devices operating in the same frequency band. Sub-7 GHz sensing was achieved based on amendments to the 802.11ax and 802.11be standards, which achieves sensing measurements with bandwidths of up to 320 MHz and across up to 8 frequency bands of 2.4 GHz, 5 GHz, and 6 GHz, thereby supporting sensing applications that require high resolution and good coverage.

On the basis of the definition, a sensing initiator is a station (AP station or non-AP station) that initiates the sensing process by transmitting a sensing measurement setting request frame. A sensing responder is a station that participates in the sensing process initiated by the sensing initiator by transmitting a sensing measurement settings response frame. A sensing transmitter is a station that transmits PPDUs used for sensing during the sensing process. A sensing receiver is a station that obtains sensing measurements by receiving PPDUs transmitted by the sensing transmitter. IEEE 802.11bf defines two variants of sensing measurements below 7 GHz. Trigger-based (TB) sensing measurement is applicable in scenarios where an AP acts as the sensing initiator, while non-trigger-based (non-TB) sensing measurement is applicable in scenarios where a non-AP STA serves as the sensing initiator.

Depending on whether the sensing initiator is also a sensing transmitter or a sensing receiver, a sensing measurement report may or may not be required in the WLAN sensing process. Specifically, if the sensing initiator is also the sensing receiver, the initiator performs the measurements itself and obtains results through the measurements, without the need to prepare a sensing measurement report additionally. Conversely, if the sensing initiator is the sensing transmitter, the measurements are performed relying on the sensing receiver. Therefore, unless otherwise specified, the sensing initiator obtains the sensing measurement results, and the sensing receiver is obligated to feed the report back to the initiator. In WLAN scenarios, there may be multiple scenarios. In a scenario, an STA may transmit a sensing signal and receive a reflected signal (or referred to as an echo signal). In another scenario, an STA may initiate a sensing signal, and an AP receives and transmits the echo signal or reflected signal to the STA; alternatively, the AP transmits the sensing signal to the STA. In yet another scenario, which may be a sensing scenario with multiple sensing nodes, for example, multiple STAs may all transmit sensing signals and an AP may receive the sensing signals (or the echo or reflected signals of the sensing signals); alternatively, the AP may transmit sensing signals and multiple STAs may receive the sensing signals (or reflected signals or echo signals of the sensing signals).

The sensing process of the Sub-7 GHz sensing initiator and sensing responder is shown in FIG. 14, and includes the following steps in sequence: sensing session setup, a process where sensing-capable devices discover each other, establish a secure environment and exchange basic sensing capabilities, which establishes the necessary initial steps for initiating subsequent sensing measurements; sensing measurement setup, which is a process where the sensing initiator and sensing responder negotiate and agree on operational parameters related to a specific sensing application, including role assignment (transmitter or receiver), PHY parameters (bandwidth, or the number of space streams), sensing measurement report types, and preferred scheduling information (sensing cycle, or duration); sensing measurement instance, which is a process where actual sensing measurements take place; sensing measurement termination, terminating the established sensing measurement setup; and sensing session termination, terminating the established sensing session. Here, self-transmitting and self-receiving unipolar sensing does not consider or perform the establishment of sensing sessions and the establishment of sensing measurement.

With the development of WiFi sensing technologies, security and privacy issues have also drawn attention. Currently, there are two types of security and privacy issues in WiFi sensing: 1) confidentiality and integrity protection of sensing reports, potential solutions to eavesdropping on sensing reports including secure communication that encrypts sensing measurements during feedback; 2) eavesdropping on sensing data packets/signals, potential solutions to eavesdropping on sensing data packets/signals including physical layer security methods that encrypt the packets/signals used to obtain sensing measurements.

Wireless channels are unique, random, and unpredictable. Unless two communication nodes are completely identical in time, frequency, and spatial domains, they are virtually impossible to spoof, forming the security foundation of physical layer authentication. In the integrated communication and sensing systems, the physical layer is shared between communication and sensing systems. Physical layer authentication is performed based on wireless channels, which enables the innate integration of authentication for both communication and sensing services. In the current wireless communication networks, existing physical layer authentication mechanisms may be divided into three categories: 1) identity authentication mechanisms based on wireless channels (channel mechanisms); 2) mechanisms based on transceiver hardware differences (hardware mechanisms), such as radio frequency (RF) fingerprints; and 3) physical layer signal watermarking mechanisms (watermarking mechanisms). The authentication based on wireless channel characteristics may be summarized into two fundamental mechanisms: one is a comparison authentication mechanism based on CSI, such as authentication based on channel similarity comparison; the other is an encryption authentication mechanism based on CSI, such as physical layer challenge response.

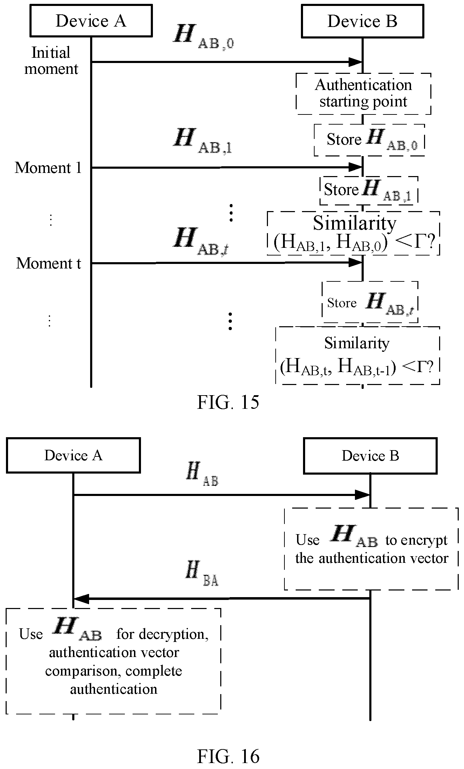

The comparison authentication mechanism based on CSI operates as follows: wireless channel characteristics are used as the root of trust of the authentication, and the legitimacy of the current message source is confirmed by determining the similarity between the channel characteristics of the current data frame and the channel characteristics of the previous data frame. Since wireless channels are spatially decorrelation-free, wireless channels may characterize the identity of nodes at specific positions. When an attacker launches an attack from a position that does not overlap with that of a legitimate node, the wireless channel changes significantly, making authentication impossible. The basic principle of the comparison authentication mechanism based on CSI may be summarized as the authentication process of the device B for signals from the device A, as shown in FIG. 15, the specific steps of which include: at the initial moment of communication, the device B ensures, through higher-layer authentication, that the channel estimation result $H_{AB,0}$ (or CSI) corresponding to the signal transmitted at the initial moment comes from a legitimate device A, establishes the authentication starting point, and stores $H_{AB,0}$; at the next moment 1, the device B compares the CSI ($H_{AB,1}$ as shown in FIG. 15) of the current data frame 1 with the CSI $H_{AB,0}$ stored at the previous moment to check whether the expression of Similarity ($H_{AB,1}$, $H_{AB,0}$) $< \Gamma$ is satisfied, where $\Gamma$ may be a threshold used for authentication; at multiple subsequent moments, such as the moment t, the device B compares the CSI ($H_{AB,t}$ as shown in FIG. 15) of the current data frame with the CSI stored at the previous moment to check whether the expression of Similarity($H_{AB,t}$, $H_{AB,t-l}$) $< \Gamma$ is satisfied. If satisfied, the device B confirms that the current data frame comes from a legitimate device A and updates the currently stored CSI; otherwise, the device B rejects the current message. Due to the spatial decorrelation and time-varying nature of wireless channels, it is difficult for attackers to replicate current legitimate CSI.

The comparison authentication mechanism based on CSI utilizes the identity identification where wireless channel characteristics serve as nodes, represents a passive authentication method. The encryption authentication mechanism based on CSI draws on the challenge-response concept in higher-level authentication, using wireless channel characteristics to hide authentication information at the physical layer and completing the demodulation and comparison of authentication information based on channel reciprocity. The basic principle of the encryption authentication mechanism based on CSI may be summarized as the process in FIG. 16, including: after one communicating party, such as the device A, transmits a signal to the device B, the device B uses $H_{AB}$ (or referred to as CSI) to perform encryption calculation on the authentication vector, and then transmits another signal to the device A; the device A uses $H_{BA}$, which is reciprocal to $H_{AB}$, to decrypt the received signal accordingly and completes authentication based on the comparison of the authentication vectors.

The related standards also involve integrity detection mechanisms for physical layer positioning results, which refer to the level of trust in the accuracy of position-related data provided by the positioning system, as well as the capability to deliver timely and effective warnings to location service (LCS) clients in the case where the positioning system fails to meet expected operational conditions. The primary objective is to limit positioning result errors to achieve high confidence in positioning outcomes. The adopted methods mainly involve analyzing offsets in carrier, timing, phase, code words, etc., based on assistance data (e.g., sent by the LMF) to assess the credibility of positioning results. 38857 identifies feared events that affect the integrity of these positions, including multipath propagation, malicious interference, and spoofing attacks. Since wireless sensing technology and 5G positioning technology differ in principle, the existing integrity detection mechanism may be extended to perform multi-attribute physical layer authentication on the sensing measurement data. For example, by extracting features from the received physical layer sensing echo signal, the similarity between the CSI, RSS, carrier, timing, code word, and phase parameters in the current slot and the sensing measurement parameter in the previous slot may be determined to determine whether there are malicious interference signals and whether the current sensing result is reliable.

It can be seen from the above analysis that sensing has become a key technology in 6G. Since the sensing reference signal (e.g., an SRS, a PRS, a DL-PRS) and the measured sensing data normally come from a lower layer (i.e., PHY or MAC), existing 3GPP technologies have difficulty authenticating the signal source of the sensing signal and verifying the integrity of the signal. To address the authentication problem of the sensing reference signal, the embodiments of the present application provide an authentication method: a transmitting end configuring and transmitting a sensing reference signal based on sensing capabilities reported by a receiving end; and the receiving end performing channel estimation on the echo signal of the sensing reference signal based on the configuration information and calculating a joint similarity between multi-attribute sensing measurement parameters (e.g., CSI, RSS) obtained in the current time slot and those obtained in a previous time slot to determine the source of the sensing signal. Through the above solution, authentication is performed by comparing the similarity between multi-attribute sensing parameters measured at different slots (or different times) with a threshold, which may resist man-in-the-middle attacks such as tampering and spoofing, so that authentication accuracy is high compared to single-attribute authentication methods. Additionally, in the above solution, physical layer authentication is performed by directly using sensing measurement parameters corresponding to the sensing reference signal without requiring additional measurements, thereby ensuring high standard compatibility.

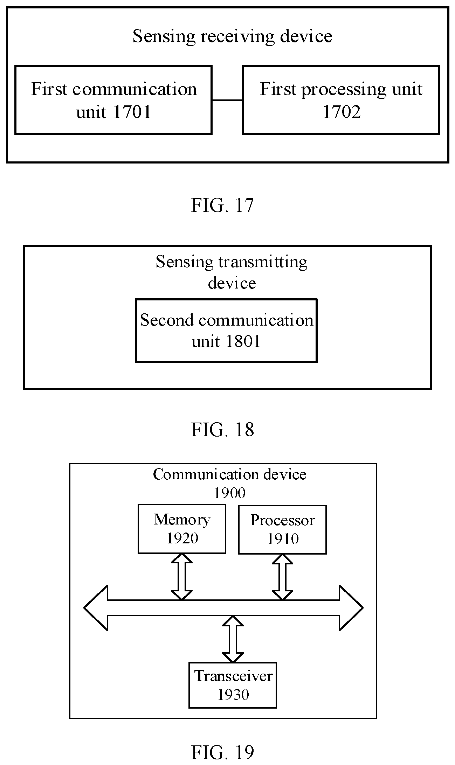

FIG. 17 is a schematic diagram of a composition structure of a sensing receiving device according to an embodiment of the present application, including:

a first communication unit 1701 configured to receive an echo signal of a first sensing reference signal, where the echo signal of the first sensing reference signal is used to authenticate a sensing transmitting device, and the sensing transmitting device is a device that transmits the first sensing reference signal.

As shown in FIG. 17, the sensing receiving device further includes a first processing unit 1702, where

the first processing unit is configured to calculate a sensing measurement parameter based on the echo signal of the first sensing reference signal.

The first processing unit is configured to authenticate the sensing transmitting device based on the sensing measurement parameter and a sensing reference parameter.

The first processing unit is configured to authenticate the sensing transmitting device based on the sensing measurement parameter, the sensing reference parameter, and an authentication threshold.

The sensing reference parameter is obtained by calculation based on an echo signal of a second sensing reference signal, the second sensing reference signal preceding to the first sensing reference signal.

The sensing reference parameter is pre-configured or pre-defined.

The first sensing reference signal carries a first signature for authenticating the sensing transmitting device.

The first processing unit is configured to: obtain the first signature based on the echo signal of the first sensing reference signal; and authenticate the sensing transmitting device based on a public key and the first signature.

The first processing unit is configured to obtain first sensing measurement data corresponding to the echo signal of the first sensing reference signal in the case where the sensing transmitting device is successfully authenticated.

The first sensing reference signal is obtained based on a first reference signal sequence, the first reference signal sequence is obtained by encryption calculation based on a shared key and a reference signal sequence, and the shared key is shared between the sensing receiving device and the sensing transmitting device.

The first processing unit is configured to: perform encryption calculation on a second reference signal sequence based on the shared key and the reference signal sequence; generate an encrypted reference signal based on the second reference signal sequence; and obtain the first sensing measurement data based on the encrypted reference signal and the echo signal of the first sensing reference signal.

The sensing assistance information includes at least one of: the authentication threshold, or an authentication time interval; the authentication time interval is used to determine the second sensing reference signal prior to the first sensing reference signal, and the sensing assistance information is pre-configured or pre-defined.

The first communication unit is configured to report a capability of the sensing receiving device to a sensing function entity; the capability of the sensing receiving device is used to determine the sensing assistance information.

The first communication unit is configured to: receive a capability of the sensing transmitting device; and report the capability of the sensing transmitting device to a sensing function entity; the capability of the sensing transmitting device is used to determine the sensing assistance information.

The sensing receiving device is a terminal, and the sensing transmitting device is an access network device.

The first sensing reference signal is a downlink sensing reference signal; the downlink sensing reference signal is one of: a channel state information reference signal (CSI-RS), a positioning reference signal (PRS), a demodulation reference signal (DMRS), a downlink data signal for sensing, or a downlink reference signal for sensing.

The sensing receiving device is an access network device, and the sensing transmitting device is a terminal.

The first sensing reference signal is an uplink sensing reference signal; the uplink sensing reference signal is one of: a sounding reference signal (SRS), a DMRS, an uplink data signal for sensing, or an uplink reference signal for sensing.

The sensing receiving device is a wireless access point (AP), and the sensing transmitting device is a station (STA). Alternatively, the sensing receiving device is an STA and the sensing transmitting device is an AP.

The first sensing reference signal is a physical layer protocol data unit (PPDU).

FIG. 18 is a schematic diagram of a composition structure of a sensing transmitting device according to an embodiment of the present application, including:

a second communication unit 1801 configured to transmit a first sensing reference signal, where the first sensing reference signal is used by the sensing receiving device to authenticate the sensing transmitting device.

The first sensing reference signal carries a first signature for authenticating the sensing transmitting device, where the first signature is obtained by calculation based on a private key.

The first sensing reference signal is obtained based on a first reference signal sequence, the first reference signal sequence is obtained by encryption calculation based on a shared key and a reference signal sequence, and the shared key is shared between the sensing receiving device and the sensing transmitting device.

The second communication unit is configured to: receive a capability of the sensing receiving device; and transmit the capability of the sensing receiving device to a sensing function entity.

The second communication unit is configured to transmit the capability of the sensing receiving device to the sensing transmitting device.

The sensing receiving device is a terminal, and the sensing transmitting device is an access network device.

The first sensing reference signal is a downlink sensing reference signal, where the downlink sensing reference signal is one of: a channel state information reference signal (CSI-RS), a positioning reference signal (PRS), a demodulation reference signal (DMRS), a downlink data signal for sensing, or a downlink reference signal for sensing.

The sensing receiving device is an access network device, and the sensing transmitting device is a terminal.

The first sensing reference signal is an uplink sensing reference signal; the uplink sensing reference signal is one of: a channel sounding reference signal (SRS), an uplink data signal for sensing, or an uplink reference signal for sensing.

The sensing receiving device is a wireless access point (AP), and the sensing transmitting device is a station (STA). Alternatively, the sensing receiving device is an STA, and the sensing transmitting device is an AP.

The first sensing reference signal is a physical layer protocol data unit (PPDU).

The device in the embodiments of the present application can implement the corresponding functions of each device in the aforementioned authentication method embodiments. The procedure, function, implementation and beneficial effects corresponding to each module (e.g., sub-module, unit, or component) in the device may refer to the corresponding description in the above method embodiments and will not be repeated here. It should be noted that the functions described with respect to the various modules (e.g., sub-modules, units, or components) in the device in the embodiments of the present application may be implemented by different modules (e.g., sub-modules, units, or components) or implemented by a same module (e.g., sub-module, unit, or component).

FIG. 19 is a schematic structural diagram of a communication device 1900 according to the embodiments of the present application. The communication device 1900 includes a processor 1910, and the processor 1910 may call a computer program from a memory and run the computer program, to cause the communication device 1900 to implement the method in the embodiments of the present application.

In a possible implementation, the communication device 1900 may further include a memory 1920. The processor 1910 may call a computer program from the memory 1920 and run the computer program, to cause the communication device 1900 to implement the method in the embodiments of the present application. The memory 1920 may be a separate device independent of the processor 1910, or may be integrated into the processor 1910.

In a possible implementation, the communication device 1900 may further include a transceiver 1930, and the processor 1910 may control the transceiver 1930 to communicate with other devices, and specifically, to transmit information or data to other devices, or receive information or data transmitted by other devices. The transceiver 1930 may include a transmitter and a receiver. The transceiver 1930 may further include antenna(s), and the number of antennas may be one or more.

The embodiments of the present application provide a sensing receiving device, including: a processor, and a memory communicating with the processor. The memory is configured to store instructions, and when the instructions are executed by the processor, the instructions cause the sensing receiving device to perform: receiving an echo signal of a first sensing reference signal; the echo signal of the first sensing reference signal is used to authenticate a sensing transmitting device, and the sensing transmitting device is a device that transmits the first sensing reference signal.

The instructions further cause the sensing receiving device to perform: obtaining by calculation a sensing measurement parameter based on the echo signal of the first sensing reference signal.

The instructions further cause the sensing receiving device to perform: authenticating the sensing transmitting device based on the sensing measurement parameter and a sensing reference parameter.

The instructions further cause the sensing receiving device to perform: authenticating the sensing transmitting device based on the sensing measurement parameter, the sensing reference parameter, and an authentication threshold.

The sensing reference parameter is obtained by calculation based on an echo signal of a second sensing reference signal; the second sensing reference signal precedes the first sensing reference signal.

The sensing reference parameter is pre-configured or pre-defined.

The first sensing reference signal carries a first signature for authenticating the sensing transmitting device.

The instructions further cause the sensing receiving device to perform: obtaining the first signature based on the echo signal of the first sensing reference signal; and authenticating the sensing transmitting device based on a public key and the first signature.

The instructions further cause the sensing receiving device to perform: obtaining first sensing measurement data corresponding to the echo signal of the first sensing reference signal in the case where the sensing transmitting device is successfully authenticated.

The first sensing reference signal is obtained based on a first reference signal sequence, the first reference signal sequence is obtained by encryption calculation based on a shared key and a reference signal sequence, and the shared key is shared between the sensing receiving device and the sensing transmitting device.

The instructions further cause the sensing receiving device to perform: performing encryption calculation on a second reference signal sequence based on the shared key and the reference signal sequence; generating an encrypted reference signal based on the second reference signal sequence; and obtaining first sensing measurement data based on the encrypted reference signal and the echo signal of the first sensing reference signal.

The sensing assistance information includes at least one of: the authentication threshold, or an authentication time interval; the authentication time interval is used to determine the second sensing reference signal prior to the first sensing reference signal; the sensing assistance information is pre-configured or pre-defined.

The instructions further cause the sensing receiving device to perform: reporting a capability of the sensing receiving device to a sensing function entity; the capability of the sensing receiving device is used to determine the sensing assistance information.

The instructions further cause the sensing receiving device to perform: receiving a capability of the sensing transmitting device; and reporting the capability of the sensing transmitting device to the sensing function entity; the capability of the sensing transmitting device is used to determine the sensing assistance information.

The sensing receiving device is a terminal, and the sensing transmitting device is an access network device.

The first sensing reference signal is a downlink sensing reference signal, where the downlink sensing reference signal is one of: a channel state information reference signal (CSI-RS), a positioning reference signal (PRS), a demodulation reference signal (DMRS), a downlink data signal for sensing, or a downlink reference signal for sensing.

The sensing receiving device is an access network device, and the sensing transmitting device is a terminal.

The first sensing reference signal is an uplink sensing reference signal, where the uplink sensing reference signal is one of: a sounding reference signal (SRS), a DMRS, an uplink data signal for sensing, or an uplink reference signal for sensing.

The sensing receiving device is a wireless access point (AP), and the sensing transmitting device is a station (STA). Alternatively, the sensing receiving device is an STA, and the sensing transmitting device is an AP.

The first sensing reference signal is a physical layer protocol data unit (PPDU).

The embodiments of the present application provide a sensing transmitting device, including: a processor, and a memory communicating with the processor; the memory is configured to store instructions, where when the instructions are executed by the processor, the instructions cause the sensing transmitting device to perform: transmitting a first sensing reference signal, where the first sensing reference signal is used by a sensing receiving device to authenticate the sensing transmitting device.

The first sensing reference signal carries a first signature for authenticating the sensing transmitting device, where the first signature is obtained by calculation based on a private key.

The first sensing reference signal is obtained based on a first reference signal sequence, the first reference signal sequence is obtained by encryption calculation based on a shared key and a reference signal sequence, and the shared key is shared between the sensing receiving device and the sensing transmitting device.

The instructions further cause the sensing transmitting device to perform: receiving a capability of the sensing receiving device; and transmitting the capability of the sensing receiving device to a sensing function entity.

The instructions further cause the sensing transmitting device to perform: transmitting a capability of the sensing transmitting device to the sensing receiving device.

The sensing receiving device is a terminal, and the sensing transmitting device is an access network device.

The first sensing reference signal is a downlink sensing reference signal, where the downlink sensing reference signal is one of: a channel state information reference signal (CSI-RS), a positioning reference signal (PRS), a demodulation reference signal (DMRS), a downlink data signal for sensing, or a downlink reference signal for sensing.

The sensing receiving device is an access network device, and the sensing transmitting device is a terminal.

The first sensing reference signal is an uplink sensing reference signal, where the uplink sensing reference signal is one of: a channel sounding reference signal (SRS), an uplink data signal for sensing, or an uplink reference signal for sensing.

The sensing receiving device is a wireless access point (AP), and the sensing transmitting device is a station (STA). Alternatively, the sensing receiving device is an STA, and the sensing transmitting device is an AP.

The first sensing reference signal is a physical layer protocol data unit (PPDU).

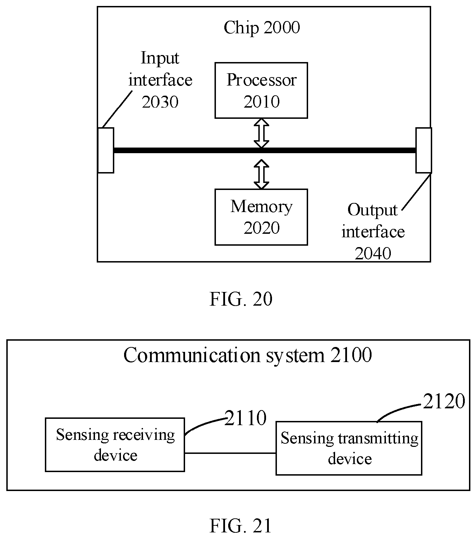

FIG. 20 is a schematic structural diagram of a chip 2000 according to the embodiments of the present application. The chip 2000 includes a processor 2010, and the processor 2010 may call a computer program from a memory and run the computer program, to implement the methods in the embodiments of the present application. In a possible implementation, the chip 2000 may further include a memory 2020. The processor 2010 may call a computer program from the memory 2020 and run the computer program, to implement the methods performed by the access network device or the core network device in the embodiments of the present application. The memory 2020 may be a separate device independent of the processor 2010, or may be integrated into the processor 2010. In a possible implementation, the chip 2000 may further include an input interface 2030. The processor 2010 may control the input interface 2030 to communicate with other devices or chips, and specifically, to acquire information or data transmitted by other devices or chips. In a possible implementation, the chip 2000 may further include an output interface 2040. The processor 2010 may control the output interface 2040 to communicate with other devices or chips, and specifically, to output information or data to other devices or chips. In a possible implementation, the chip may be applied to various devices in the embodiments of the present application, and the chip may implement the corresponding procedures implemented by various devices in the various methods of the embodiments of the present application, which will not be repeated here for the sake of brevity. It should be understood that the chip mentioned in the embodiments of the present application may also be called a system on chip, a system chip, a chip system or a system-on-chip chip, etc.

The above-mentioned processor may be a general-purpose processor, a digital signal processor, a field programmable gate array, an application specific integrated circuit, a programmable logic device, a transistor logic device, or a discrete hardware component, etc. The general-purpose processor may be a microprocessor or may be any conventional processor. The memory may be a volatile memory or a non-volatile memory, or may include both the volatile and non-volatile memory. The non-volatile memory may be a read-only memory, a programmable read-only memory, an erasable programmable read-only memory, an electrically erasable programmable read-only memory, or a flash memory. The volatile memory may be a random access memory.

It should be understood that the above-mentioned memory is exemplary but not a limited illustration. For example, the memory in the embodiments of the present application may also be a static random access memory, a dynamic random access memory, etc. In other words, the memory in the embodiments of the present application is intended to include, but not limited to, these and any other suitable types of memories.

FIG. 21 is a schematic block diagram of a communication system 2100 according to the embodiments of the present application. The communication system 2100 includes a sensing receiving device 2110 and a sensing transmitting device 1320. The above embodiments may be implemented in whole or in part by software, hardware, firmware, or any combination thereof. In the case where the above embodiments are implemented by using software, they may be implemented in the form of a computer program product in whole or in part. The computer program product includes one or more computer instructions. When computer program instructions are loaded and executed on a computer, processes or functions according to the embodiments of the present application are generated in whole or in part. The computer may be a general-purpose computer, a dedicated computer, a computer network, or any other programmable apparatus. The computer instructions may be stored in a computer-readable storage medium or transmitted from a computer-readable storage medium to another computer-readable storage medium; for example, the computer instructions may be transmitted from a website site, computer, server, or data center to another website site, computer, server, or data center via wired (e.g., coaxial cable, fiber optic, digital subscriber line) or wireless (e.g., infrared, radio, microwave) manners. The computer-readable storage medium may be any available medium that can be accessed by the computer, or a data storage device, such as a server or a data center that integrates one or more available media. The available medium may be a magnetic medium (e.g., a hard disk) or a semiconductor medium (e.g., a solid state disk).

It should be understood that, in the various embodiments of the present application, a magnitude of serial numbers of the above processes does not imply an order of execution, and the execution order of the respective processes should be determined by their function and internal logic, but should not constitute any limitation on the implementation processes of the embodiments of the present application.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present application, but the protection scope of the present application is not limited thereto, and any skilled familiar with this technical field may easily think of changes or substitutions within the technical scope disclosed in the present application. Therefore, the protection scope of the present application should be determined based on the protection scope of claims.

**Claims**

1. An authentication method performed by a sensing receiving device, comprising:
   receiving an echo signal of a first sensing reference signal, wherein the echo signal of the first sensing reference signal is used to authenticate a sensing transmitting device, and the sensing transmitting device is a device that transmits the first sensing reference signal.

2. The method according to claim 1, wherein the method further comprises:
   obtaining a sensing measurement parameter by calculation based on the echo signal of the first sensing reference signal.

3. The method according to claim 2, wherein the method further comprises:
   authenticating the sensing transmitting device based on the sensing measurement parameter and a sensing reference parameter.

4. The method according to claim 3, wherein the authenticating the sensing transmitting device based on the sensing measurement parameter and the sensing reference parameter comprises:
   authenticating the sensing transmitting device based on the sensing measurement parameter, the sensing reference parameter and an authentication threshold.

5. The method according to claim 3 or 4, wherein the sensing reference parameter is obtained by calculation based on an echo signal of a second sensing reference signal, wherein the second sensing reference signal precedes the first sensing reference signal.

6. The method according to claim 3 or 4, wherein the sensing reference parameter is pre-configured or pre-defined.

7. The method according to claim 1, wherein the first sensing reference signal carries a first signature for authenticating the sensing transmitting device.

8. The method according to claim 7, wherein the method further comprises:

   obtaining the first signature based on the echo signal of the first sensing reference signal; and
   authenticating the sensing transmitting device based on a public key and the first signature.

9. The method according to any one of claims 1 to 8, wherein the method further comprises:
   obtaining first sensing measurement data corresponding to the echo signal of the first sensing reference signal in response to the sensing transmitting device being successfully authenticated.

10. The method according to any one of claims 6 to 8, wherein the first sensing reference signal is obtained based on a first reference signal sequence, the first reference signal sequence is obtained by encryption calculation based on a shared key and a reference signal sequence, and the shared key is shared between the sensing receiving device and the sensing transmitting device.

11. The method according to claim 10, wherein the method further comprises:

    obtaining a second reference signal sequence by encryption calculation based on the shared key and the reference signal sequence;
    generating an encrypted reference signal based on the second reference signal sequence; and
    obtaining first sensing measurement data based on the encrypted reference signal and the echo signal of the first sensing reference signal.

12. The method according to any one of claims 4 to 6, wherein sensing assistance information comprises at least one of the authentication threshold or an authentication time domain interval, wherein the authentication time domain interval is used to determine a second sensing reference signal prior to the first sensing reference signal, and the sensing assistance information is pre-configured or pre-defined.

13. The method according to claim 12, wherein the method further comprises:
    reporting a capability of the sensing receiving device to a sensing function entity, wherein the capability of the sensing receiving device is used to determine the sensing assistance information.

14. The method according to claim 12, wherein the method further comprises:

receiving a capability of the sensing transmitting device; and
reporting the capability of the sensing transmitting device to a sensing function entity, wherein the capability of the sensing transmitting device is used to determine the sensing assistance information.

15. The method according to any one of claims 1 to 13, wherein the sensing receiving device is a terminal, and the sensing transmitting device is an access network device.

16. The method according to claim 15, wherein the first sensing reference signal is a downlink sensing reference signal, wherein the downlink sensing reference signal is one of: a channel state information reference signal (CSI-RS), a positioning reference signal (PRS), a demodulation reference signal (DMRS), a downlink data signal for sensing, or a downlink reference signal for sensing.

17. The method according to any one of claims 1 to 12 and claim14, wherein the sensing receiving device is an access network device, and the sensing transmitting device is a terminal.

18. The method according to claim 17, wherein the first sensing reference signal is an uplink sensing reference signal, wherein the uplink sensing reference signal is one of: a sounding reference signal (SRS), a DMRS, an uplink data signal for sensing, or an uplink reference signal for sensing.

19. The method according to any one of claims 1 to 12, wherein the sensing receiving device is a wireless access point (AP), and the sensing transmitting device is a station (STA); or the sensing receiving device is an STA, and the sensing transmitting device is an AP.

20. The method according to claim 19, wherein the first sensing reference signal is a physical layer protocol data unit (PPDU).

21. An authentication method performed by a sensing transmitting device, comprising:
transmitting a first sensing reference signal, wherein the first sensing reference signal is used by a sensing receiving device to authenticate the sensing transmitting device.

22. The method according to claim 21, wherein the first sensing reference signal carries a first signature for authenticating the sensing transmitting device, wherein the first signature is obtained by calculation based on a private key.

23. The method according to claim 21 or 22, wherein the first sensing reference signal is obtained based on a first reference signal sequence, the first reference signal sequence is obtained by encryption calculation based on a shared key and a reference signal sequence, and the shared key is shared between the sensing receiving device and the sensing transmitting device.

24. The method according to any one of claims 21 to 23, wherein the method further comprises:

receiving a capability of the sensing receiving device; and
transmitting the capability of the sensing receiving device to a sensing function entity.

25. The method according to any one of claims 21 to 23, wherein the method further comprises:
transmitting a capability of the sensing transmitting device to the sensing receiving device.

26. The method according to any one of claims 21 to 24, wherein the sensing receiving device is a terminal, and the sensing transmitting device is an access network device.

27. The method according to claim 26, wherein the first sensing reference signal is a downlink sensing reference signal, wherein the downlink sensing reference signal is one of: a channel state information reference signal (CSI-RS), a positioning reference signal (PRS), a demodulation reference signal (DMRS), a downlink data signal for sensing, or a downlink reference signal for sensing.

28. The method according to any one of claims 21 to 23 and claim 25, wherein the sensing receiving device is an access network device, and the sensing transmitting device is a terminal.

29. The method according to claim 28, wherein the first sensing reference signal is an uplink sensing reference signal, wherein the uplink sensing reference signal is one of: a channel sounding reference signal (SRS), an uplink data signal for sensing, or an uplink reference signal for sensing.

30. The method according to any one of claims 21 to 23, wherein the sensing receiving device is a wireless access point (AP), and the sensing transmitting device is a station (STA); or the sensing receiving device is an STA, and the sensing transmitting device is an AP.

31. The method according to claim 30, wherein the first sensing reference signal is a physical layer protocol data unit (PPDU).

32. A sensing receiving device, comprising:
a first communication unit configured to receive an echo signal of a first sensing reference signal, wherein the echo signal of the first sensing reference signal is used to authenticate a sensing transmitting device, and the sensing transmitting device is a device that transmits the first sensing reference signal.

33. The sensing receiving device according to claim 32, wherein the sensing receiving device further comprises a first processing unit; wherein
the first processing unit is configured to obtain a sensing measurement parameter by calculation based on the echo signal of the first sensing reference signal.

34. The sensing receiving device according to claim 33, wherein the first processing unit is configured to authenticate the sensing transmitting device based on the sensing measurement parameter and a sensing reference parameter.

35. The sensing receiving device according to claim 34, wherein the first processing unit is configured to authenticate the sensing transmitting device based on the sensing measurement parameter, the sensing reference parameter, and an authentication threshold.

36. The sensing receiving device according to claim 34 or 35, wherein the sensing reference parameter is obtained by calculation based on an echo signal of a second sensing reference signal, wherein the second sensing reference signal precedes the first sensing reference signal.

37. The sensing receiving device according to claim 34 or 35, wherein the sensing reference parameter is pre-configured or pre-defined.

38. The sensing receiving device according to claim 32, wherein the first sensing reference signal carries a first signature for authenticating the sensing transmitting device.

39. The sensing receiving device according to claim 38, wherein the first processing unit is configured to: obtain the first signature based on the echo signal of the first sensing reference signal; and authenticate the sensing transmitting device based on a public key and the first signature.

40. The sensing receiving device according to any one of claims 32 to 39, wherein the first processing unit is configured to obtain first sensing measurement data corresponding to the echo signal of the first sensing reference signal in a case where the sensing transmitting device is successfully authenticated.

41. The sensing receiving device according to any one of claims 37 to 39, wherein the first sensing reference signal is obtained based on a first reference signal sequence, the first reference signal sequence is obtained by encryption calculation based on a shared key and a reference signal sequence, and the shared key is shared between the sensing receiving device and the sensing transmitting device.

42. The sensing receiving device according to claim 41, wherein the first processing unit is configured to: perform encryption calculation on a second reference signal sequence based on the shared key and the reference signal sequence; generate an encrypted reference signal based on the second reference signal sequence; and obtain first sensing measurement data based on the encrypted reference signal and the echo signal of the first sensing reference signal.

43. The sensing receiving device according to any one of claims 35 to 37, wherein sensing assistance information comprises at least one of the authentication threshold or an authentication time domain interval, wherein the authentication time domain interval is used to determine a second sensing reference signal prior to the first sensing reference signal, and the sensing assistance information is pre-configured or pre-defined.

44. The sensing receiving device according to claim 43, wherein the first communication unit is configured to report a capability of the sensing receiving device to a sensing function entity, wherein the capability of the sensing receiving device is used to determine the sensing assistance information.

45. The sensing receiving device according to claim 43, wherein the first communication unit is configured to: receive a capability of the sensing transmitting device; and report the capability of the sensing transmitting device to a sensing function entity; wherein the capability of the sensing transmitting device is used to determine the sensing assistance information.

46. The sensing receiving device according to any one of claims 32 to 44, wherein the sensing receiving device is a terminal, and the sensing transmitting device is an access network device.

47. The sensing receiving device according to claim 46, wherein the first sensing reference signal is a downlink sensing reference signal, wherein the downlink sensing reference signal is one of: a channel state information reference signal (CSI-RS), a positioning reference signal (PRS), a demodulation reference signal (DMRS), a downlink data signal for sensing, or a downlink reference signal for sensing.

48. The sensing receiving device according to any one of claims 32 to 43 and claim 45, wherein the sensing receiving device is an access network device, and the sensing transmitting device is a terminal.

49. The sensing receiving device according to claim 48, wherein the first sensing reference signal is an uplink sensing reference signal, wherein the uplink sensing reference signal is one of: a sounding reference signal (SRS), a DMRS, an uplink data signal for sensing, or an uplink reference signal for sensing.

50. The sensing receiving device according to any one of claims 32 to 43, wherein the sensing receiving device is a wireless access point (AP), and the sensing transmitting device is a station (STA); or the sensing receiving device is a STA and the sensing transmitting device is an AP.

51. The sensing receiving device according to claim 50, wherein the first sensing reference signal is a physical layer protocol data unit (PPDU).

52. A sensing transmitting device, comprising:
a second communication unit configured to transmit a first sensing reference signal, wherein the first sensing reference signal is used by a sensing receiving device to authenticate the sensing transmitting device.

53. The sensing transmitting device according to claim 52, wherein the first sensing reference signal carries a first signature for authenticating the sensing transmitting device, wherein the first signature is obtained by calculation based on a private key.

54. The sensing transmitting device according to claim 52 or 53, wherein the first sensing reference signal is obtained based on a first reference signal sequence, the first reference signal sequence is obtained by encryption calculation based on a shared key and a reference signal sequence, and the shared key is shared between the sensing receiving device and the sensing transmitting device.

55. The sensing transmitting device according to any one of claims 52 to 54, wherein the second communication unit is configured to: receive a capability of the sensing receiving device; and transmit the capability of the sensing receiving device to a sensing function entity.

56. The sensing transmitting device according to any one of claims 52 to 54, wherein the second communication unit is configured to transmit a capability of the sensing transmitting device to the sensing receiving device.

57. The sensing transmitting device according to any one of claims 52 to 55, wherein the sensing receiving device is a terminal, and the sensing transmitting device is an access network device.

58. The sensing transmitting device according to claim 57, wherein the first sensing reference signal is a downlink sensing reference signal, wherein the downlink sensing reference signal is one of: a channel state information reference signal (CSI-RS), a positioning reference signal (PRS), a demodulation reference signal (DMRS), a downlink data signal for sensing, or a downlink reference signal for sensing.

59. The sensing transmitting device according to any one of claims 52 to 54 and 56, wherein the sensing receiving device is an access network device, and the sensing transmitting device is a terminal.

60. The sensing transmitting device according to claim 59, wherein the first sensing reference signal is an uplink sensing reference signal, wherein the uplink sensing reference signal is one of: a channel sounding reference signal (SRS), an uplink data signal for sensing, or an uplink reference signal for sensing.

61. The sensing transmitting device according to any one of claims 52 to 54, wherein the sensing receiving device is a wireless access point (AP), and the sensing transmitting device is a station (STA); or the sensing receiving device is a STA, and the sensing transmitting device is an AP.

62. The sensing transmitting device according to claim 61, wherein the first sensing reference signal is a physical layer protocol data unit (PPDU).

63. A sensing receiving device, comprising: a transceiver, a processor, and a memory, wherein the memory is configured to store a computer program, the processor is configured to call the computer program stored in the memory and run the computer program, to cause the sensing receiving device to perform the method according to any one of claims 1 to 20.

64. A sensing transmitting device, comprising: a transceiver, a processor, and a memory, wherein the memory is configured to store a computer program, the processor is configured to call the computer program stored in the memory and run the computer program, to cause the sensing transmitting device to perform the method according to any one of claims 21 to 31.

65. A chip, comprising: a processor configured to call a computer program from a memory and run the computer program, to cause a device equipped with the chip to perform the method according to any one of claims 1 to 20 or the method according to any one of claims 21 to 31.

66. A computer-readable storage medium, configured to store a computer program, wherein the computer program, when executed by a device, causes the device to perform the method according to any one of claims 1 to 20 or the method according to any one of claims 21 to 31.

67. A computer program product, comprising computer program instructions, wherein the computer program instructions cause a computer to perform the method according to any one of claims 1 to 20 or the method according to any one of claims 21 to 31.

68. A computer program, wherein the computer program causes a computer to perform the method according to any one of claims 1 to 20 or the method according to any one of claims 21 to 31.

**100**

110

120 120

FIG. 1

Receive an echo signal of a first sensing reference signal, where the echo signal of the first sensing reference signal is used to authenticate a sensing transmitting device, and the sensing transmitting device is a device that transmits the first sensing reference signal — S210

FIG. 2

Transmit a first sensing reference signal, where the first sensing reference signal is used by a sensing receiving device to authenticate the sensing transmitting device — S310

FIG. 3

Base station — Sensing reference signal → Target

Echo signal of sensing reference signal

Communication signal

UE

FIG. 4

| UE | Sensing target | Base station | Sensing function entity |
|---|---|---|---|

501: Sensing service request

502: Sensing capability request

503: Sensing capability report

503: Sensing capability report

504: Transmit sensing assistance data (including at least one of: a sensing service identification, a sensing algorithm, a sensing measurement parameter type, a calculation method of similarity, an authentication slot interval, or an authentication threshold)

505: Transmit sensing reference signal configuration information

505: Determine sensing reference signal resource

506: Transmit a sensing reference signal in a 0-th slot

506: Generate a sensing reference signal

507: Perform identity authentication on an echo signal of the sensing reference signal received for the first time; perform channel estimation and store a multi-attribute sensing measurement parameter after successful authentication

506: Transmit a sensing reference signal in a n-th slot

508: Calculate similarity between the multi-attribute sensing measurement in the current slot and the attribute sensing measurement in a certain previous slot, if the similarity is lower than the authentication threshold, UE determines that the sensing signal comes from a legitimate base station; otherwise, the UE discards the sensing measurement data

509: Sensing measurement data

FIG. 5

User A

File

One-way hash function

128-bit digest

Private key of A     Encrypt

Encrypted digest

Generate

File

Encrypted digest

Public key of A

Transmit

User B

File

One-way hash function

128-bit digest to be verified

Whether Equal?

Decrypted 128-bit digest

Public key of A     Decrypt

Encrypted digest

FIG. 6

Sensing
reference signal

UE → Target

Communication
signal

Echo signal of
sensing reference
signal

Base station

## FIG. 7

| UE | Sensing target | Base station | Sensing function entity |
|---|---|---|---|

801: Sensing service request

802: Sensing capability request

803: Sensing capability report

803: Sensing capability report

804: Transmit sensing assistance data

805: Determine sensing reference signal resource

805: Transmit sensing reference signal configuration information

806: Generate a sensing reference signal

806: Transmit a a sensing reference signal in a 0-th slot

807: Perform identity authentication on an echo signal of the sensing reference signal received for the first time; perform channel estimation and store a multi-attribute sensing measurement parameter after successful authentication

⋮

806: Transmit a sensing reference signal in an n-th slot

808: Calculate similarity between the multi-attribute sensing measurement in the current slot and the attribute sensing measurement in a previous slot, if the similarity is lower than the authentication threshold, the UE determines that the sensing signal comes from a legitimate base station; otherwise, the UE discards the sensing measurement data

809: Sensing measurement data

## FIG. 8

FIG. 9

FIG. 10

FIG. 11a

| Preamble | Data | TRN | TRN | TRN |
|----------|------|-----|-----|-----|

Direct the sensing receiver to the LOS
or best path

Scan different areas for sensing

## FIG. 11b

| | Preamble | | Signal | | OFDM Data symbol | | | | | |
|---|---|---|---|---|---|---|---|---|---|---|
| | Short field | Long field | | | Data 1 | …… | …… | …… | …… | Data N |

| Preamble (Synchronization)(12 symbols) | | Signal (1 symbol) | Data or payload (a variable number of OFDM symbol) | | |
|---|---|---|---|---|---|
| STS (10 short symbols) | LTS (2 long symbols) | Signal (1 symbol) | Data 1 (1 symbol) | …… | DataN (1 symbol) |

## FIG. 11c

FIG. 12

Target 1 ...... Target K

FIG. 13

FIG. 14

FIG. 15

FIG. 16

Sensing receiving device

| First communication unit 1701 | First processing unit 1702 |

FIG. 17

Sensing transmitting device

Second communication unit 1801

FIG. 18

Communication device 1900

Memory 1920

Processor 1910

Transceiver 1930

FIG. 19

Chip 2000

Input
interface
2030

Processor
2010

Memory
2020

Output
interface
2040

FIG. 20

Communication system 2100

Sensing receiving
device

2110

2120

Sensing transmitting
device

FIG. 21

## INTERNATIONAL SEARCH REPORT

| International application No. |
| --- |
| **PCT/CN2023/118034** |

| A. | CLASSIFICATION OF SUBJECT MATTER |
| --- | --- |

H04W12/06(2021.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP, IEEE, arXiv: 通信, 感知, 一体, 通感一体, 认证, 鉴权, 回波, 反射, ISAC, communication, sensing, integrated, authenticate, echo, reflex, reflect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116367121 A (HUAWEI TECHNOLOGIES CO., LTD.) 30 June 2023 (2023-06-30) description, paragraphs [0058]-[0090] | 1-3, 9, 15-21, 26-34, 40, 46-52, 57-68 |
| A | CN 115514513 A (BEIJING UNIVERSITY OF POSTS AND TELECOMMUNICATIONS) 23 December 2022 (2022-12-23) entire document | 1-68 |
| A | CN 114303073 A (HUAWEI TECHNOLOGIES CO., LTD.) 08 April 2022 (2022-04-08) entire document | 1-68 |
| A | WO 2022110923 A1 (HUAWEI TECHNOLOGIES CO., LTD.) 02 June 2022 (2022-06-02) entire document | 1-68 |
| A | LU, Shihang et al. "Integrated Sensing and Communications: Recent Advances and Ten Open Challenges" *https://arxiv.org/pdf/2305.00179v1.pdf,* 29 April 2023 (2023-04-29), entire document | 1-68 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 April 2024** | **10 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118034**

| Patent document cited in search report | | | Publication date (day/month/year) | Patent family member(s) | | | Publication date (day/month/year) |
|---|---|---|---|---|---|---|---|
| CN | 116367121 | A | 30 June 2023 | WO | 2023125197 | A1 | 06 July 2023 |
| CN | 115514513 | A | 23 December 2022 | | None | | |
| CN | 114303073 | A | 08 April 2022 | US | 2022030626 | A1 | 27 January 2022 |
| | | | | US | 11903024 | B2 | 13 February 2024 |
| | | | | EP | 4022350 | A1 | 06 July 2022 |
| | | | | EP | 4022350 | A4 | 25 January 2023 |
| | | | | US | 2021076417 | A1 | 11 March 2021 |
| | | | | US | 11178691 | B2 | 16 November 2021 |
| | | | | WO | 2021047284 | A1 | 18 March 2021 |
| WO | 2022110923 | A1 | 02 June 2022 | US | 2023299934 | A1 | 21 September 2023 |
| | | | | EP | 4236413 | A1 | 30 August 2023 |
| | | | | CN | 114584988 | A | 03 June 2022 |

Form PCT/ISA/210 (patent family annex) (July 2022)